# FASCICULE DE BREVET EUROPEEN

(11) **EP 0 531 513 B1**
(45) Date de publication et mention de la délivrance du brevet: **10.06.1998**
(21) Numéro de dépôt: 92909977.8
(22) Date de dépôt: 27.03.1992
(51) Int. Cl.: G06F 11/34

(54) **DISPOSITIF PERFECTIONNE D'EVALUATION DE PERFORMANCE ADAPTABLE**
Anpassbare Vorrichtung zur Leistungsauswertung
IMPROVED ADAPTABLE PERFORMANCE EVALUATION DEVICE

(30) Priorité: 29.03.1991 FR 9103915
(43) Date de publication de la demande: 17.03.1993
(73) Titulaire: BULL S.A., 92800 Puteaux (FR)
(72) Inventeur: ANDRES, Frédéric, F-75015 Paris (FR)
(74) Mandataire: Colombe, Michel
(86) Numéro de dépôt international: FR9200283
(87) Numéro de publication internationale: WO9217843

(56) Documents cités:
- COMMUNICATIONS OF THE ASSOCIATION FOR COMPUTING MACHINERY. vol. 23, no. 9, Septembre 1980, NEW YORK US pages 511 - 512; B. KUMAR ET AL.: 'Computer System Design Using a Hierarchical Approach to Performance Evaluation'
- PROCEEDINGS OF THE IEEE. vol. 75, no. 5, Mai 1987, NEW YORK US pages 563 - 571; A.R. HEVNER ET AL.: 'Querying Distributed Databases on Local Area Networks'
- PROCEEDINGS OF THE 5TH INTERNATIONAL CONFERENCE ON DISTRIBUTED COMPUTING SYSTEMS 13 Mai 1985, DENVER, COLORADO, US pages 282 - 291; M.J. CAREY ET AL.: 'Dynamic Task Allocation in a Distributed Database System'

## Description

La présente invention concerne un dispositif perfectionné d'évaluation de performance adaptable par résolution analytique. Ce dispositif est adaptable à de nouveaux types d'une part d'architecture de machines d'autre part de systèmes, et permettant d'évaluer le temps de réponse d'une requête, le temps total d'exécution, le taux d'occupation mémoire résultant d'une requête et un profil statistique des résultats. Un tel dispositif doit pouvoir être utilisé pour différents types de système de gestion de base de données. La résolution analytique est permise par la modélisation de l'environnement sous forme de formule par opposition à une résolution par simulation.

Enfin, ce dispositif peut être utilisé également comme configurateur (appelé degré de liberté), c'est à dire en fixant quelques uns des éléments, il permet de dégager une amélioration sur les autres éléments ainsi, par exemple, en fixant une architecture et un système pour une application donnée, il permet de trouver le système de gestion de base de données (SGBD) le plus adapté à ce type de configurations. Par contre, pour une application particulière de gestion de base de données il est possible, en déterminant l'ensemble des requêtes généralement utilisé, de définir l'architecture du système la plus adaptée aux types de requêtes.

Tel que décrit dans la revendication 1, ce but est atteint par le fait que le dispositif d'évaluation de performance adaptable par résolution analytique de base de donnée, comprenant un sytème informatique ayant une architecture donnée, comporte une bibliothèque de connaissance de l'environnement spécifique de la base de données et un évaluateur de performance.

Les bibliothèques comportent dans le langage de spécifications d'environnement (ESL) :
une bibliothèque d'architecture modélisant le matériel ;
une bibliothèque de systèmes modélisant le système opérationnel et transactionnel supportés par l'architecture du matériel ;
une bibliothèque de méthode d'accès et d'opération modélisant les algorithmes utilisés par le gestionnaire de données;
une bibliothèque de profils de base de données groupant les connaissances sur le schéma de base de données et des statistiques sur l'application utilisateur.

Ledit évaluateur de performance effectuant une évaluation qui est faite en fonction d'au moins un paramètre sélectionné parmi une pluralité de paramètres définis dans un algorithme de filtres projetés appliqué à ladite bibliothèque de connaissance.

Selon une autre particularité de l'invention, au moins un desdits paramètres est le coût de création d'un process (P_{CREAT}) qui représente le coût (Cᵢ) d'exécution d'une simple instruction sur un système multiplié par le nombre d'instructions nécessaires pour créer le process.

Selon une autre particularité de l'invention, au moins un desdits paramètres représente un coût (C_{INITSCAN}) pour initialiser un balayage et obtenir le premier tuple évalué.

Selon une autre particularité de l'invention, au moins un desdits paramétres est le coût (C_{SCAN}) pour rechercher les tuples suivants et évaluer un prédicat de la requête.

Selon une autre particularité de l'invention, au moins un desdits paramètres est une fonction d'évaluation dépendante de paramètres définis dans l'algorithme de projection de filtre prenant en compte au moins un des paramètres suivants R.card qui est une fonction d'estimation du nombre de prédicats évalués par les tuples balayés, des constantes (C_{NEXT}, C_{INIT}), et du coût (Cₑ) d'évaluation d'un simple prédicat (C_{INIT}) du coût d'initialisation d'un balayage de relation pour obtenir le premier tuple (C_{NEXT}) du coût pour obtenir le tuple suivant.

Selon une autre particularité de l'invention la description de l'architecture générale dépend du classement en architecture à mémoire distribuée ou en architecture à mémoire partagée ou en architecture comportant un mélange de deux.

Selon une autre particularité de l'invention le noyau d'évaluation est constitué de deux couches, une première couche exécutant les évaluations locales (Algorithmes appliqués à un paquet de données) et l'autre couche les évaluations non locales (globales, communication ou matérialisation des données).

Selon une autre particularité de l'invention la bibliothèque de profils de base de données contient les informations sur la structure de la base de données qui est orientée vers le relationel (relation, attribut, index).

Selon une autre particularité de l'invention l'optimiseur paralléliseur calcule seulement les différents algorithmes locaux appliqués aux données et se limite à un noeud de calculateur qui est soit un processeur, soit un paquet de données, à la fois.

Selon une autre particularité de l'invention l'optimiseur paralléliseur prend en compte les communications et la construction des résultats intermédiaires et du résultat final.

Selon une autre particularité de l'invention l'optimiseur paralléliseur détermine quel algorithme global sera utilisé pour effectuer le parallélisme inter-opération parmi les noeuds du calculateur.

Selon une autre particularité de l'invention l'algorithme global précise le traitement effectué globalement sur les données et les paquets de données qui sont concernés et comment les données intermédiaires vont être partagées.
Selon un exemple d'utilisation la bibliothèque de modélisation de matériel comporte un attribut définissant la taille mémoire en nombre d'octet (Mem-Si) ;
Un attribut définissant le temps d'accès par octet à la mémoire (MAT) ;
Un attribut définissant le temps d'exécution par le processeur d'une seule instruction (Ci) ;
Un attribut définissant le temps d'exécution par le processeur d'un déplacement d'un pointeur (Cₘ) ;
Un attribut définissant la taille maximum d'information lors d'une comparaison simple pour une information de base (S_{comp}) ;
Un attribut définissant le coût d'une simple comparaison entre deux informations de base (C_{comp}) ;
Un attribut définissant le coût de calcul d'une adresse calculée par une fonction de hachage (Cₕ) ;
Un attribut définissant le coût d'évaluation d'un simple prédicat (Cₑ) ;
Un attribut définissant le coût d'une opération de tri élémentaire (Cₛ) ;
Un attribut définissant la taille de trame en nombre d'octet (Pac-Si) ;
Un attribut définissant le temps pour envoyer une trame (Sₘₜ) ;
Un attribut définissant le temps de réception d'une trame (Rₘₜ) et enfin un attribut définissant le temps de transfert d'une trame entre deux processeurs (Pᵤ) et une description de l'architecture générale constituée à partir des composants.

Selon un exemple d'utilisation le profil de base de données prend en compte les informations suivantes :
Nom de la relation (Rel-Na)
Cardinalité en nombre de tuples (Rel-Ca)
Taille des tuples en nombre d'octet (Tup-Si)
Nombre d'attribut dans un tuple (Att-Nu)
Degré du parallélisme en nombre de processeur, fournissant le nombre de processeurs qui manipulent en même temps la relation (Deg)
Nombre d'accès mémoire pour lire les attributs de clé (Rka-Nu)
taille en nombre de tuples d'un paquet de données, sans sémantique, (Ch-Si)
taille en nombre de tuples d'un paquet de données, avec sémantique (Bu-Si);

Pour les attributs que la relation contient :
Le nom de l'attribut (Att-Na)
Le nombre de valeurs distinctes pour cet attribut (Att-Nv)
La taille moyenne de l'attribut en nombre d'octet (Att-Si)
La valeur maximum de l'attribut (Att-Mav)
La valeur minimale de l'attribut (Att-Miv)
La distribution des valeurs d'attribut (Att-Dis) ;

Dans le cas des index :
La taille d'une page d'arbre B en nombre d'objets (Btp-Si)
Le nombre de valeurs d'index (In-Nv)
La taille de la clé en nombre de bits (In-Si).

Un autre but est de permettre une présentation et une constitution aisée des bibliothèques. Ce but est atteint par le fait que la bibliothèque de connaissance est associée à un logiciel de présentation et de constitution des bibliothèques.

Selon une autre particularité le logiciel de présentation est associé à un formulaire de sélection d'une architecture qui sera prise en compte pour le processus d'évaluation, exécuté par l'évaluateur de performance (8).

Selon une autre particularité le logiciel de présentation et de description permet l'affichage d'au moins une fenêtre spécifique à chaque bibliothèque permettant sa description.

Selon une autre particularité la bibliothèque d'architecture est associée à une fenêtre de configuration d'architecture permettant l'affichage et la sélection de fenêtres de description des composants CPU, mémoire, réseau d'interconnexion constituant l'architecture. D'autres composants peuvent s'ajouter en fonction de nouvelles architectures.

Selon une autre particularité chaque fenêtre comporte un certain nombre de pavés de remplissage qui entrent sous le contrôle d'un éditeur lorsqu'un pavé est activé par un bouton de la souris pour permettre l'introduction au clavier des attributs de chaque bibliothèque et un pavé permettant d'associer un nom à l'ensemble des attributs d'un composant.

Selon une autre particularité le formulaire de sélection comporte une fenêtre à plusieurs pavés à défilement qui permet par chaque pavé associé à chaque composant constituant les architectures de la bibliothèque modélisant le matériel, de sélectionner par le nom associé aux composants, les attributs définissant le composant correspondant à la configuration d'architecture sounaitée en déplacant la surbrillance et en validant par un bouton de validation (OK).

Selon une autre particularité le formulaire de sélection d'architecture comporte dans chaque pavé à défilement, un bouton de sélection du composant mis en surbrillance.

Selon une autre particularité le formulaire d'architecture comporte un bouton de chargement et un bouton de sauvegarde.

Un autre but est de proposer un exemple d'utilisation du dispositif d'évaluation de performance, ce but est atteint par une utilisation dans un compilateur, comportant un programme (PARSER) d'analyse syntaxique et sémantique des extractions demandées ;
un gestionnaire de catalogue permettant au programme (PARSER) d'analyse syntaxique et sémantique d'effectuer les vérifications sémantiques ;
un programme optimiseur et de parallélisation qui effectue :
a) la réécriture des extractions dans une routine d'optimisation logique ;
b) La production d'un plan d'exécution optimal dans une routine d'optimisation physique ;
c) la formulation explicite de la stratégie d'exécution dans une routine de parallélisation fixée par l'optimisation physique.

Selon une autre particularité le dispositif est utilisé dans un ensemble comprenant un compilateur comportant un programme (PARSER) (2), d'analyse syntaxique et sémantique des extractions demandées, communiquant avec un gestionnaire de catalogue (5), avec un logiciel optimiseur paralléliseur (6), avec un logiciel de présentation et un logiciel d'évaluation de coûts caractérisé en ce que le résultat de l'évaluation de coût est présenté dans un formulaire constitué par une fenêtre divisée en trois zones une zone verrou d'objet, une zone transaction, et une zone de résolution des impasses.

D'autres caractéristiques et avantages de la présente invention apparaitront plus clairement à la lecture de la description ci-après faite en référence des dessins annexés dans lesquels :
La figure 1 représente une architecture de compilateur utilisant le dispositif d'évaluation adaptatif selon l'invention ;
La figure 2 représente l'évaluateur adaptatif.
La figure 3 représente un premier exemple d'architecture système.
La figure 4 représente un deuxième exemple d'architecture système.
Les figures 5 et 6 représente la grammaire du langage de spécifications d'environnements (ESL).
La figure 7 représente l'utilisation de ce langage pour définir l'architecture de la figure 3.
La figure 8 représente l'utilisation de ce langage pour définir l'architecture de la figure 4.
La figure 9 représente les attributs de définition du profil de base de donnée.
La figure 10 représente un exemple de méthoce d'accès et d'opération.
La figure 11 représente un exemple de compilateur incorporant un évaluateur non adaptatif.

La figure 12 représente une fenêtre de présentation des architecture de la bibliothèque affichée par le logiciel de présentation.

La figure 13 représente une fenêtre de présentations affichée par le logiciel de présentation pour effectuer la sélection de la configuration d'architecture.

Les figures 14A et 14B représentent La fenetre affichée par le logiciel de présentation et constitution de bibliothèque pour éditer la description d'un composant processeur de la bibliothèque.

La Figure 15 représente la fenêtre affichée par le logiciel de présentation et constitution de la bibliothèque pour éditer la description d'un composant réseau de la bibliothèque.

La Figure 16 représente la fenêtre affichée par le logiciel de présentation et constitution de la bibliothèque pour éditer la description d'un composant mémoire de la bibliothèque.

La Figure 17 représente la fenêtre initiale affichée par le logiciel de présentation pour sélectionner une des actions possibles sur une des bibliothèques du dispositif.

Les figures 18 A,B,C représentent les fenêtres permettant d'afficher les caractéristiques du système une fois les sélections de composants effectuées et l'évaluation lancée.

Les nouvelles applications de l'informatique telles que les systèmes d'information pour bureautique, les systèmes experts influencent la future génération des systèmes de base de données. Ces applications exigent des systèmes de gestion de base de données de plus en plus performants en terme de temps de réponse pour l'utilisateur. Ce but peut être atteint par le perfectionnement des compilateurs de requête, l'exécution parallèle des requêtes et l'utilisation d'algorithmes relationnels parallèles performants.

L'optimiseur de requête est fondamental pour obtenir des performances élevées. Une façon d'accroître ses capacités d'optimisation est d'améliorer ses possibilités d'évaluer avec précision les temps d'exécution des requêtes. Le rôle de l'optimiseur de requête est de réduire un plan d'exécution efficace pour obtenir l'information par l'utilisateur. Ce plan spécifie toutes les informations par exemple, méthode d'accès, ordre d'opération pour calculer la requête. L'optimiseur doit être capable d'optimiser les requêtes simples ainsi que les requêtes très complexes. Quelques applications telles que la programmation logique introduisent des expressions avec des centaines de jointures (opération relationnelle). Pour choisir le plan à exécuter, l'optimiseur de requête a besoin d'évaluer un nombre de possibilités à l'aide d'un programme d'évaluation des performances ci-après définies comme des coûts . L'évaluation de coût est basée sur un modèle de coût qui rend possible l'estimation du coût de la requête tout en prenant en compte les spécificités du calculateur et de la base de données utilisée.

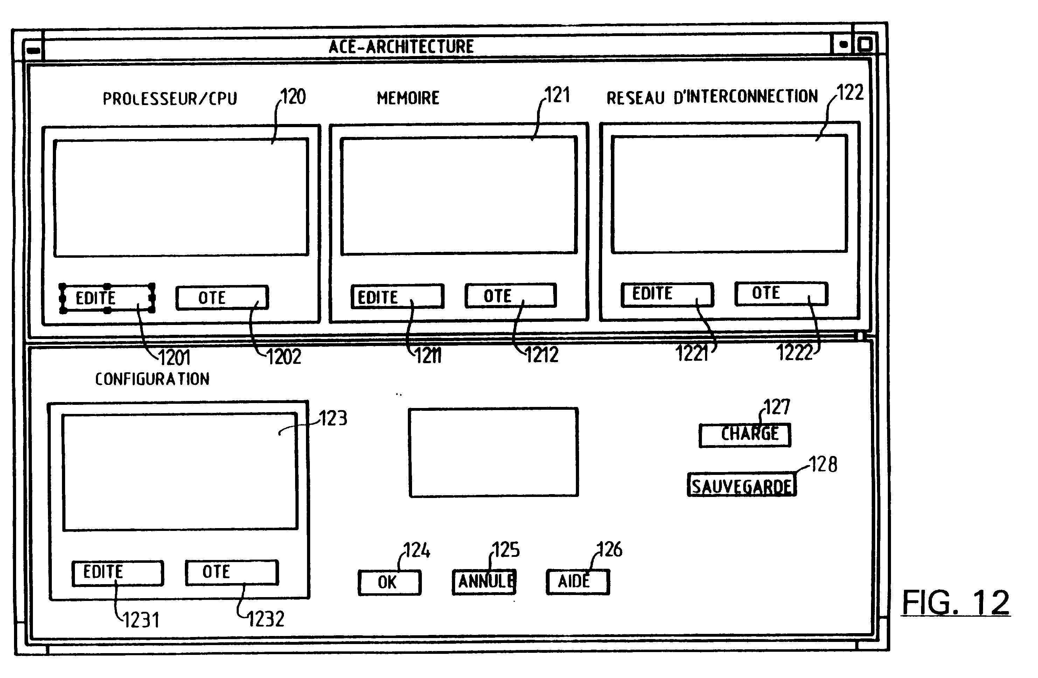

Un dispositif d'évaluation de l'art antérieur est représenté à la figure 11 sur laquelle on peut voir l'architecture d'un compilateur comprenant un programme (2) d'analyse syntaxique et sémantique (PARSER) qui communique d'une part avec un gestionnaire de catalogue (5) destiné à définir les caractéristiques de la base de données et échangeant des informations d'une part avec le programme d'analyse syntaxique et d'autre part avec un programme optimiseur (3) incluant un modèle d'évaluation de coût spécifique au compilateur et au matériel utilisé. Ce modèle d'évaluation est incorporé à l'optimiseur et n'est utilisable que pour l'architecture concernée du système informatique sur lequel les programmes ci-dessus sont exécutés. Dans une telle architecture, le modèle d'évaiuation est développé spécialement pour un environnement spécifique centralisé et ne peut pas être facilement généralisé. En outre, le coût d'une fonction complexe est difficile à exprimer et dans le cas où plusieurs méthodes sont utilisées pour la même requête il est difficile de séparer simplement leurs coûts.

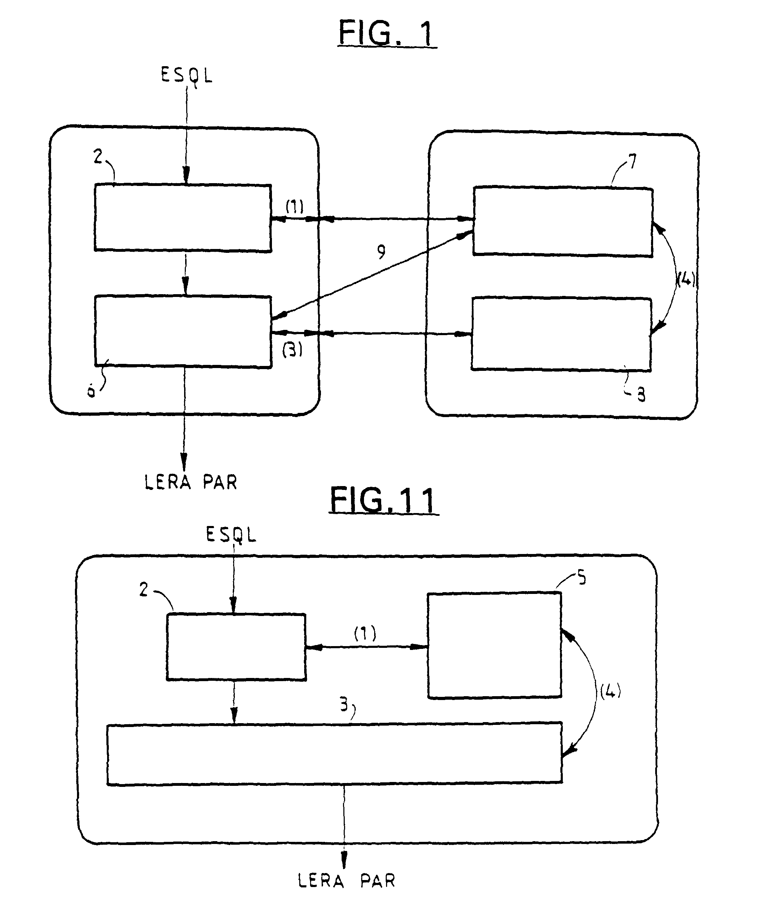

La figure 1 représente l'invention dans laquelle le compilateur et le dispositif d'évaluation sont rendus indépendant et sur laquelle ont été conservées les mêmes références pour les mêmes éléments. le compilateur comporte un programme d'analyse syntaxique et sémantique (2) qui communique d'une part avec un gestionnaire de catalogue (5) et d'autre part avec un logiciel optimiseur et paralléliseur (6). Ce logiciel optimiseur et paralléliseur (6) échange par la liaison (3) àes informations avec l'évaluateur (8). Cet évaluateur (8) échange des informations sur l'architecture sur la base de laquelle l'évaluation va être effectuée et qui peut être différente de l'architecture du système informatique dans lequel l'évaluation est faite et sur la base de données avec le gestionnaire de catalogue (5). L'optimiseur paralléliseur (6) exécute trois phases de compilation, une première appelée optimisation logique qui permet de réécrire les requêtes, une deuxième qui permet l'optimisation physique en produisant un plan d'exécution optimal et une troisième, le paralléliseur qui rend explicite la stratégie d'exécution préalablement fixée par l'optimisation physique. L'optimiseur paralléliseur appelle principalement le gestionnaire de catalogue (5) pour obtenir des informations sur le chemin relationnel par la liaison (9). L'optimiseur (6) réalise une évaluation de l'arbre de requête pour produire un plan d'exécution optimal. Ceci nécessite l'analyse d'un jeu de plan suffisamment large pour contenir le plan optimal mais suffisamment restreint pour conserver un temps d'optimisation acceptable. La sélection du plan est effectuée à l'aide des évaluations faites par l'évaluateur (8). Chaque appel de l'optimiseur à l'évaluateur par la liaison (3) peut être exprimé par un langage de programmation de base de données tel que le langage LERA (publié dans le rapport EDS.DD1110001 de S.KELLET intitulé LANGUAGE FOR EXTENDED RELATIONAL ALGEBRA) ou LERA-PHY (LERA optimisé physiquement). L'optimiseur paralléliseur (6) doit réaliser une optimisation à deux niveaux :
- Une optimisation locale limitée à un noeud de calculateur à la fois et explorant seulement les différents algorithmes locaux possibles. Le choix de l'algorithme local le moins onéreux dépend principalement de l'estimation du temps d'exécution.
- Une optimisation globale prenant en compte les communications et la construction du résultat intermédiaire et final. L'optimiseur détermine quel algorithme global sera utilisé pour obtenir un parallélisme inter-opération parmi les noeuds du calculateur. L'algorithme global précise quels noeuds sont concernées et comment les données intermédiaires sont partagées entre eux. A la fin de son travail, l'optimiseur décide l'ordre des opérations dans le calcul et il décide également le mode de production des relations intermédiaires utilisées pour l'arbre de requête.

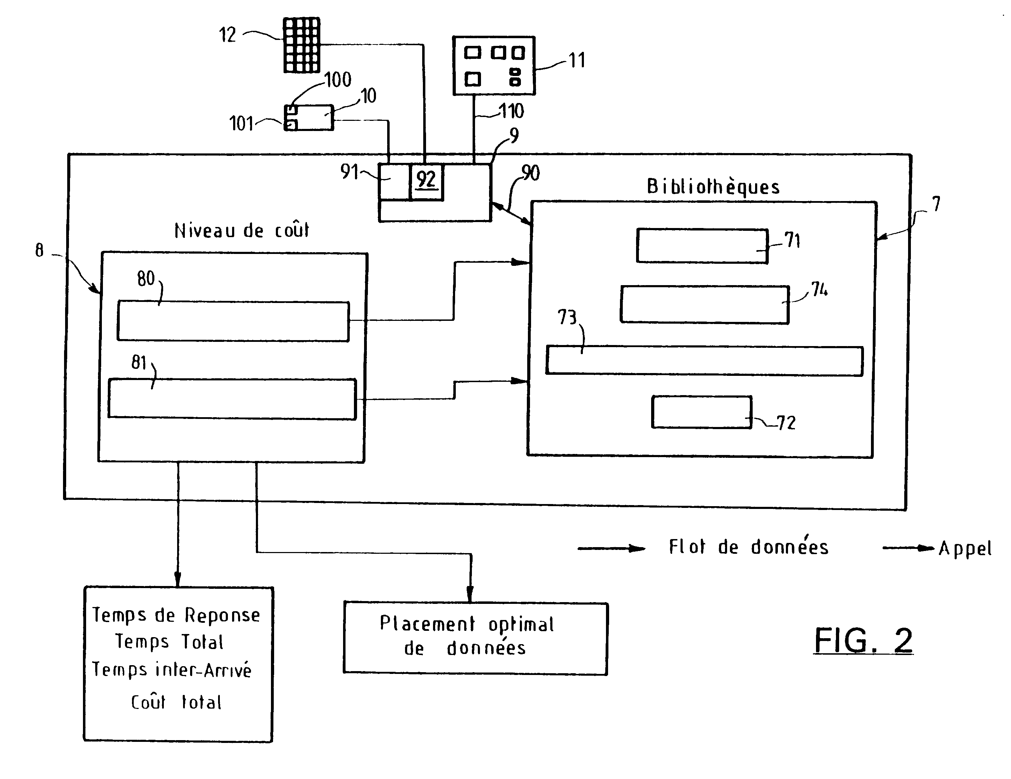

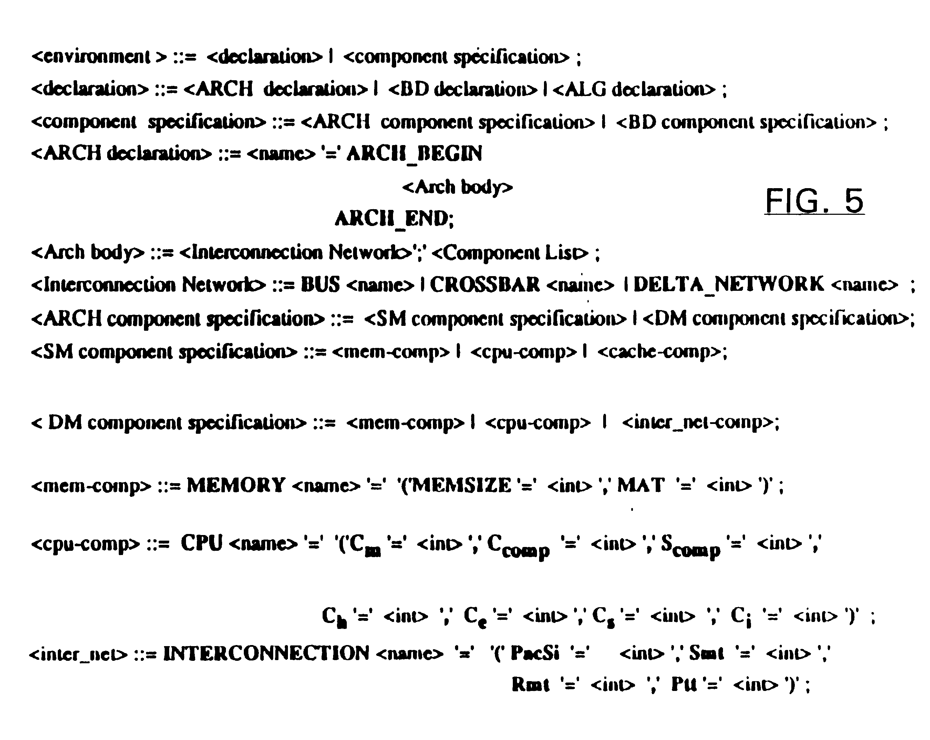

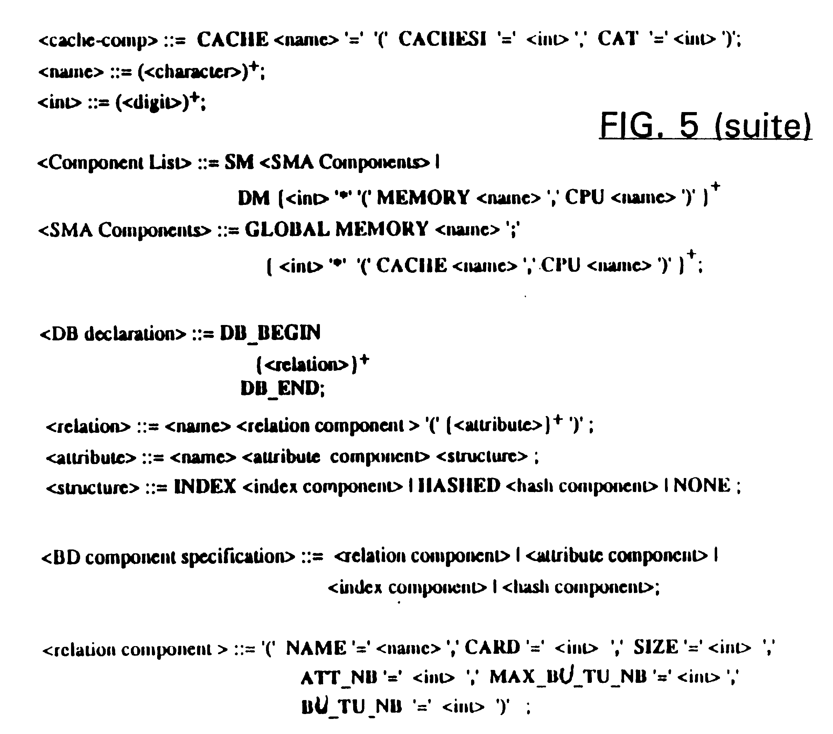

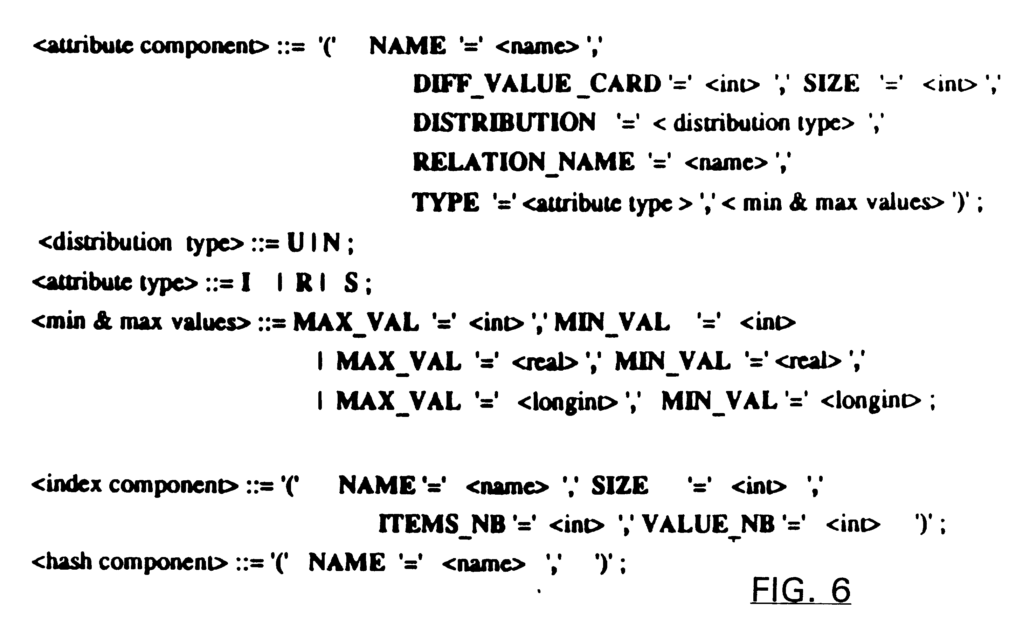

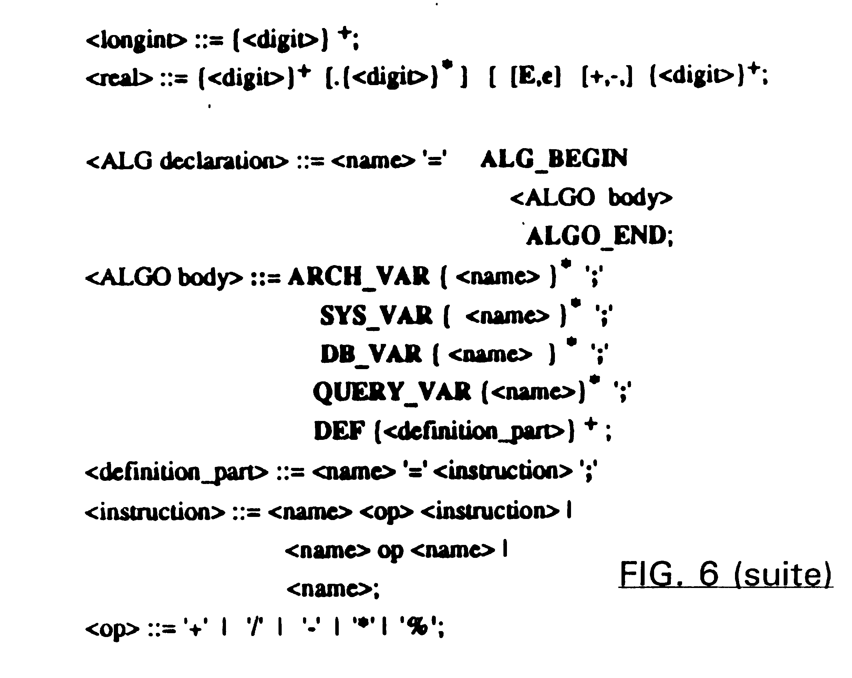

Dans une approche multi-environnement, les bibliothèques (7) sont une manière de stocker la connaissance sur des environnements spécifiques, permettant l'extensibilité et l'adaptabilité sans compromettre l'efficacité de l'évaluation. La bitliothèque (7) est composée de quatre bibliothèques comme représenté à la figure 2 :
- Une bibliothèque (71) constituant la bibliothèque d'architectures modélisant les architectures matérielles (HARDWARE) dans laquelle le système de gestion de base de données est installé ;
- Une bibliothèque de système (72) modélisant les systèmes d'exploitations et transactionnels supportés par les architectures matérielles (HARDWARE) et supportant le système de gestion de base de données ;
- Une bibliothèque (73) de méthode d'accès et d'opération modélisant les algorithmes utilisés par le gestionnaire de donnée ;
et enfin une bibliothèque de profil de base de données (74) groupant les connaissances au sujet du schéma de la base de données ainsi que les statistiques sur l'utilisation des données. L'utilisateur fournit au système les informations concernant l'environnement par l'utilisation d'un langage de spécifications d'environnement (ESL) représenté aux figure 5 et 6 pour chaque unité de bibliothèque. Chaque unité est compilée pour générer une bibliothèque structurée d'une manière orientée objet.

Le noyau d'évaluation (8) comprend deux couches , l'une exécutant les évaluations de coût non locaux (81) et l'autre les évaluations locales (80). La première couche d'évaluation des coûts non locaux (81) prend en compte les relations temporaires et les transferts de données en flot.

La seconde couche (80) calcule les coûts locaux pour le processeur central et les tailles des informations résultantes en utilisant les informations stockées dans la bibliothèque et les estimations de taille d'opérande en entrée.

La bibliothèque (71) décrivant l'architecture contient des descriptions de l'architecture générale et des descriptions des composants. Chaque composant est décrit en terme de propriétés spécifiques pour la mémoire dont un exemple est décrit comme suit :
la taille mémoire en nombre d'octet (Mem-Si) ;
le temps d'accès mémoire par octet (MAT) ;
pour le processeur central :
le coût d'une instruction simple (Cᵢ) ;
le coût de déplacement d'un pointeur (Cₘ) ;
la taille maximum d'information dans une comparaison simple (S_{comp}) ;
le coût d'une simple comparaison entre deux Informations de base (C_{comp}) ;
le coût de calcul d'une adresse calculée par une fonction de hachage (Cₕ) ;
le coût d'évaluation d'un simple prédicat (Cₑ) ;
le coût à'une opération de tri élémentaire (Cₛ) ;
pour les interconnexions :
la taille de trame en nombre d'octet (Pac-Si) ;
le temps d' envoi une trame (Sₘₜ) ;
le temps de réception d'une trame (Rₘₜ) ;
le temps de transfert d'une trame entre deux processeurs en supposant que le réseau d'interconnexion ne soit pas saturé (Ptt).

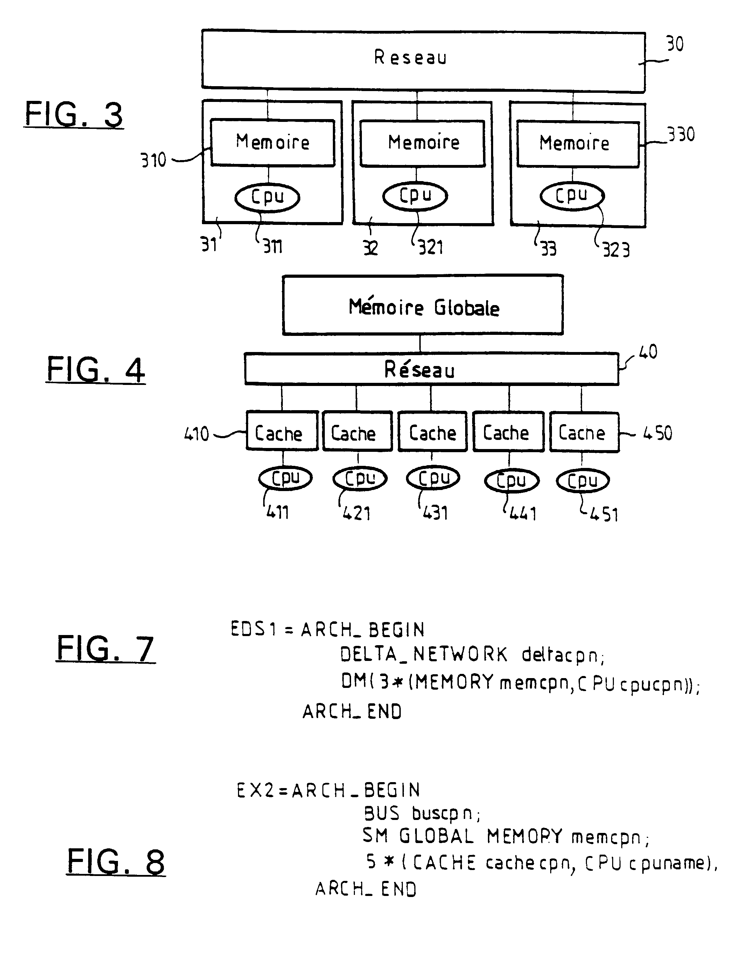

La bibliothèque d'architecture (71) comprend également une partie d'architecture générale contenant une description à haut niveau des architectures utilisées dans les études d'évaluations. A ce niveau une architecture de calculateur est vue comme une collection de composants interactifs et la focalisation est faite sur le fait de savoir si l'on se trouve en présence d' une architecture à mémoire distribuée ou d'une architecture à mémoire partagée, (nombre de niveau de mémoire, hiérarchies, types d'interconnexion et dimensions, etc..). Ainsi un exemple d'architecture est représenté à la figure 3 dans laquelle un réseau d'interconnexion (30) relie 3 blocs 31,32,33 comprenant chacun une unité centrale (311,321,323) et une mémoire associée à cette unité centrale (310 respectivement, 320 respectivement, 330). Les mémoires (310,320,330) sont distribuées mais peuvent également par le réseau d'interconnexion (30) être partagées avec le processeur d'une autre entité. Un autre type d'architecture est représenté à la figure 4, dans laquelle le réseau d'interconnexion (40) est relié d'une part à un ensemble de mémoires caches (410 à 450) associées chacune à un processeur (411 à 451) et d'autre part une mémoire globale (50) partagee entre les 5 processeurs (411 à 451). La bibliothèque (71) comprend des descriptions des différents types d'architectures qui peuvent être rencontrées.

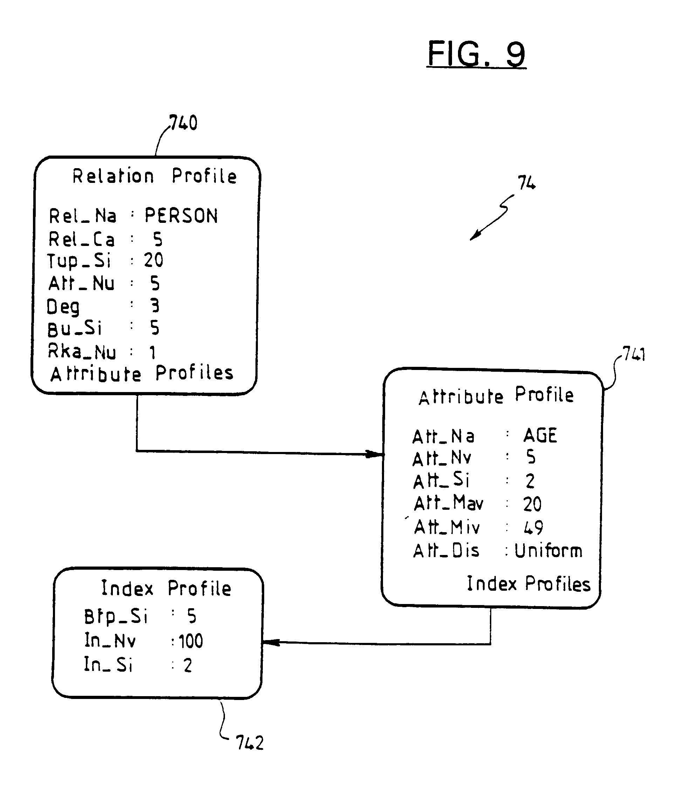

La grammaire du langage de spécification d'environnement (ESL) est représentée aux figures 5 et 6 et permet de décrire les différents environnements informatiques que l'on peut rencontrer. Le langage de spécification d'environnement (ESL) est caractérisé par une grammaire attribuée orientée objet. Ce langage est formé d'unités (architecture, profil de base, etc..) elles mêmes composées de classes d'objets, chaque classe d'objet étant constituée de triplets (nom, sémantique ou définition du nom, valeur). Ce langage est par exemple utilisé pour décrire l'architecture représentée à la figure 3, cette description correspondant à celle de la figure 7. De même l'architecture représentée à la figure 4 est décrite par les instructions de la figure 8. Dans ce langage, par exemple, la déclaration INT signifie qu'il s'agit d'un entier, ATT-NB signifie qu'il s'agit du nombre d'attributs, MAX-BU-TU-NB signifie qu'il s'agit du nombre maximal de tuples dans un paquet avec semantique. Le type de distribution peut prendre les valeurs U/N, U pour une distribution uniforme, N pour une distribution non uniforme. De même le type d'attribut peut prendre les valeurs I/R/S, I pour entier, R pour un réel, S (string) pour une chaine.

Le profil de base de données est simplifié mais représentatif de la connaissance du schéma de la base de données. Il contient également des statistiques sur la base de données. Ce profil de base de données est principalement utile dans le modèle d'évaluation pour estimer la taille des résultats de requête. Cette taille est utilisée pour mettre à jour le taux d'occupation mémoire quand les tuples de résultat sont matérialisés et également nécessaire pour estimer le temps d'exécution de requête. Cette bibliothèque contient des informations sur la structure de base de données qui est orientée relation (relation, attribut, index). Les composants du profil de la base de données sont représentés figure 9. Plusieurs profils de base de données peuvent être introduits dans la bibliothèque chaque profil étant identifié par un nom de base de données. L'unité de profil de base de données du langage ESL est utilisée pour spécifier le contenu de la bibliothèque de profil de base de données en termes statistiques. Ce profil représenté à la figure 9 est constitué d'un profil de relation (740), d'un profil d'attribut (741) et d'un profil d'index (742). Un exemple de profil de relation (740) comporte ici le nom de relation (Rel-Na), la cardinalité de la relation en nombre de tuples (Rel-Ca), la taille des tuples en nombre d'octets (Tup-Si), le nombre d'attributs dans un tuple (Att-Nu), le degré (Deg) de parallélisme en nombre de processeurs représentant le nombre de processeurs qui manipulent en même temps cette relation, le nombre d'accès mémoire pour lire les attributs clé (Rka-Nu), la taille, en nombre de tuples, des paquets de données sans sémantique (Ch-Si), la taille, en nombre de tuples, des paquets de données avec semantique (BU-Si). Le profil d'attribut (741) contient le nombre d'attributs (Att-Na), le nombre de valeurs distinctes pour cet attribut (Att-Nv) ; la taille moyenne de l'attribut en nombre d'octets (Att-Si) ; la valeur maximum de l'attribut (Att-Mav) ; la valeur minimum de l'attribut (Att-Miv), la distribution des valeurs de l'attribut (Att-Dis).

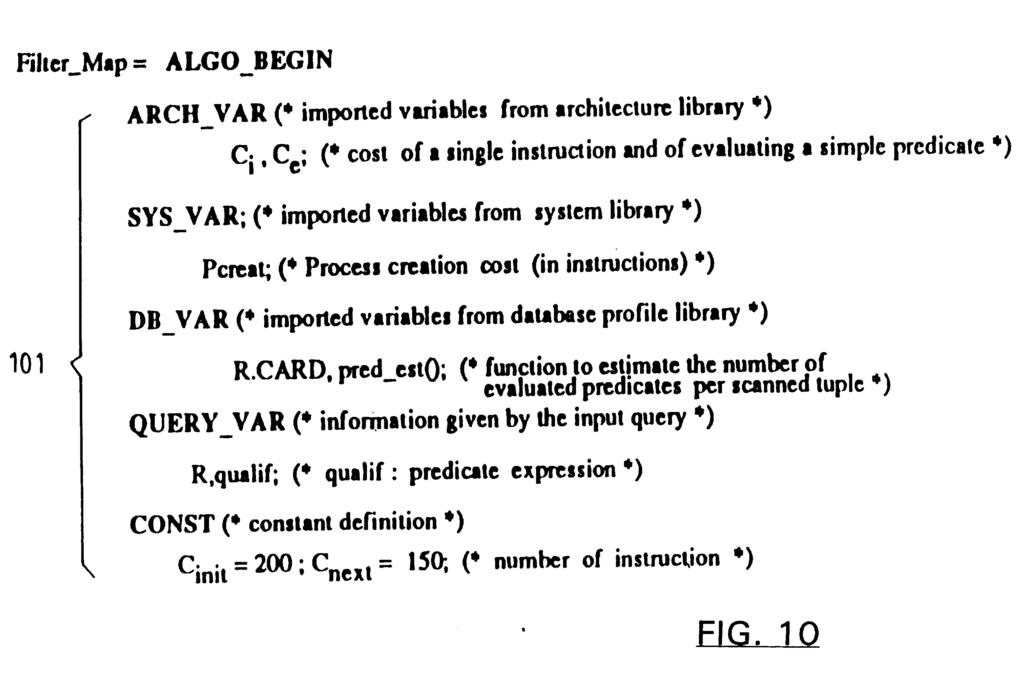

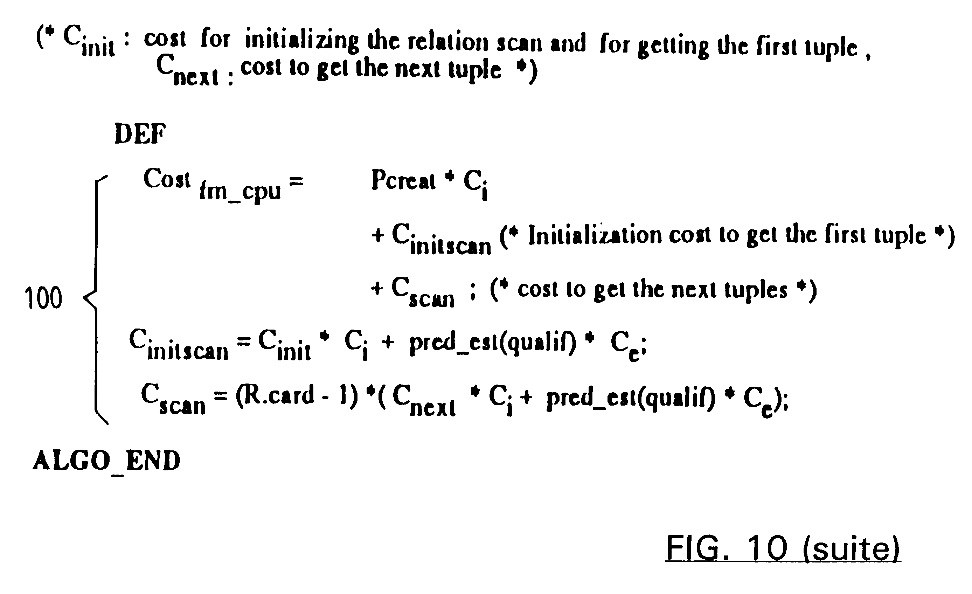

Un exemple de profil d'index (742) contient la taille des pages d'arbre bibliothèque en nombre d'objets (Btp-Si) ; le nombre de valeurs d'index (In-Nv) ; la taille de la clé en nombre d'octets (In-Si).
La bibliothèque système (72) prend en compte, par exemple, les informations sur le système de commande (création de processus, gestion des mémoires) le système transactionnel (gestion des verrous, initialisation (login)) et les informations telles que la taille de la ligne de cache en nombre d'octets (Cal-Si) ;
la taille du bus de données entre le processeur et le cache en nombre d'octets (Dab-Si) le nombre de paquets sans sémantique dans la mémoire partagée (Ch-Nu) ;
Le nombre de paquets avec sémantique dans la mémoire partagée (Bu-Nu) ;
Le temps d'accès au cache pour lire ou écrire une information (Cat) ;
Le temps de l'unité centrale pour calcuier une comparaison entre deux informations de base (T-Comp) ;
Le temps de dépassement associé pour activer chaque opération (Ove-T). Ces informations sont utilisées dans le modèle d'évaluation. Enfin la bibliothèque comporte une modélisation des méthodes d'accès et d'opération qui décrit l'opérateur de relation tel que par exemple un filtre de projection (Filter-Map) mis en oeuvre par un algorithme de balayage à appliquer au tuple de la relation donnée en tant qu'argument d'entrée dans la requête en langage LERA-PHY. Ainsi, pour une formule d'évaluation donnée (100) représentée à la figure 10 dans laquelle une évaluation est faite en fonction d'un certain nombre de paramètres tel que P_{CREAT}, Cᵢ, C_{init scan}, C_{scan} qui eux-mêmes sont fonction d'évaluation dépendant de paramètres définis dans un algorithme de filtre projeté (Filter-Map), explicité dans la partie 101 de la figure 10.

Les algorithmes d'évaluation du type de celui (100) représenté à la figure 10 constituent l'évaluateur (8). Pour de plus amples informations sur les modèles d'évaluation , l'homme de l'art pourra se référer au rapport EP2025 DDllb3501, mai 1990 de F.ANDRES intitulé "Study of some typical algorithms for a cost model definition" et au rapport EP2025 DDllb3901 intitulé "Cosc model for a database system in a distributed memory architecture".

Dans un autre mode de réalisation de l'invention, les bibliothèques peuvent être présentées de façon plus conviviale grâce à un logiciel (9) de présentation et de constitution des bibliothèques qui communiquent par une liaison (90) avec chacune des bibliothèques de l'invention. Ce logiciel (9) est également en relation par une liaison (91) avec un souris (10) qui permet de provoquer des événements extérieurs. La souris a été choisi du type à deux boutons (100,101), le bouton de gauche (100) étant affecté par convention aux sélections de zones ou d'objets graphiques à l'écran et aux appels d'éditeur, le bouton de droite (101) étant affecté à des opérations spécifiques telles que la manipulation de certains menus. Les événements extérieurs provenant de la souris sont traités par une interface souris préprogrammée incorporée au logiciel (9) et susceptible en outre de reconnaitre l'appui (down) , le relâchement (up) d'un bouton, la traîne (drague) de la souris et des événements logiques tels que l'entrée du pointeur souris dans la fenêtre. A l'écran la position du pointeur de la souris est repérée par une petite flèche dirigée vers le haut.

Bien entendu, sans sortir du cadre de l'invention, la souris pourrait être remplacée par tout autre dispositif de pointage tel qu'un crayon optique ou une table graphique. Enfin en complément de l'interface souris, on prévoit également un interface (92) pour un clavier (11) programmé autant pour les touches de caractères que celles de contrôles et celles de pointeurs, de façon à pouvoir entrer dans le mode édition les informations qui correspondent aux attributs des différents composants de chacune des bibliothèques.

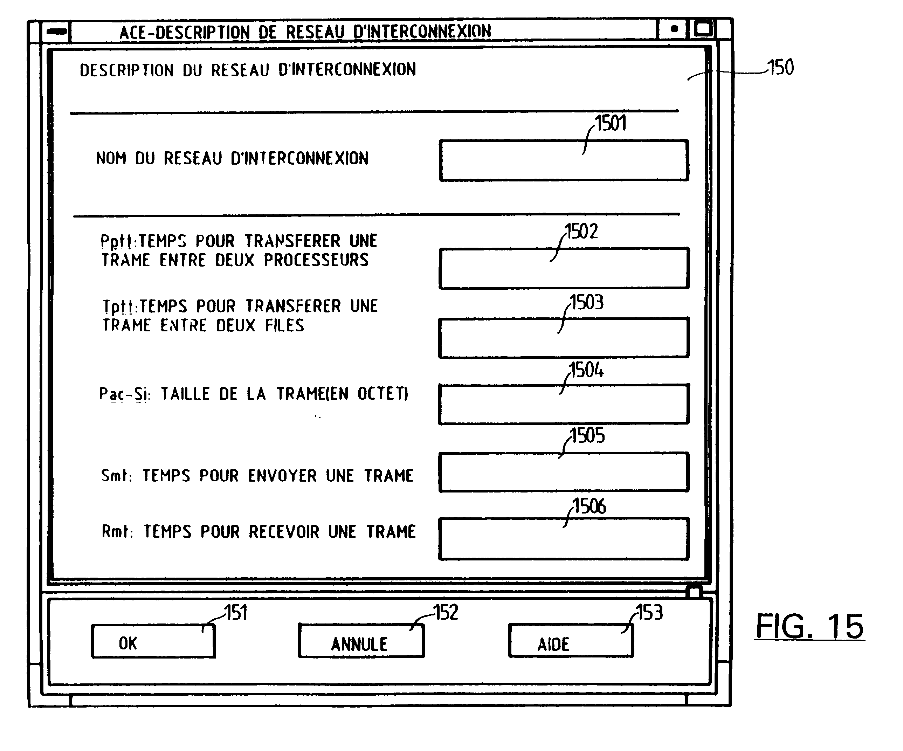

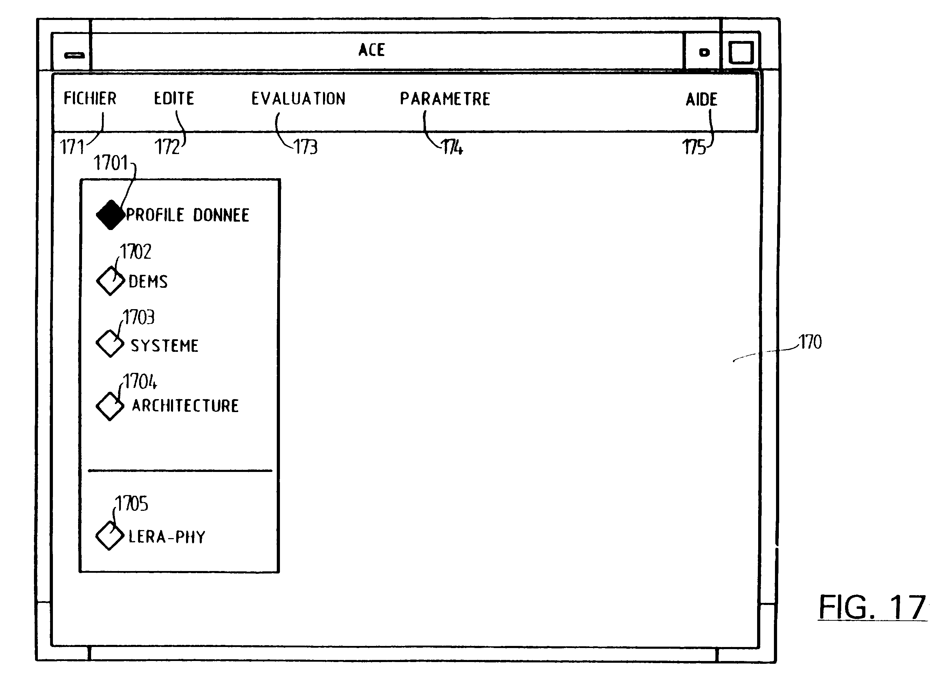

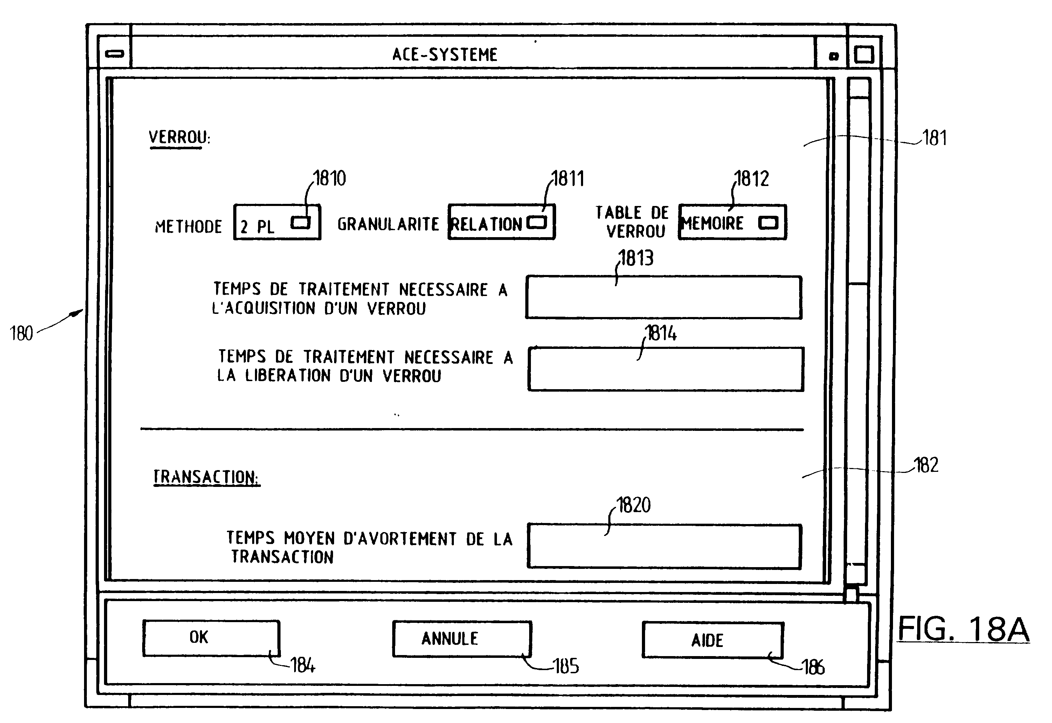

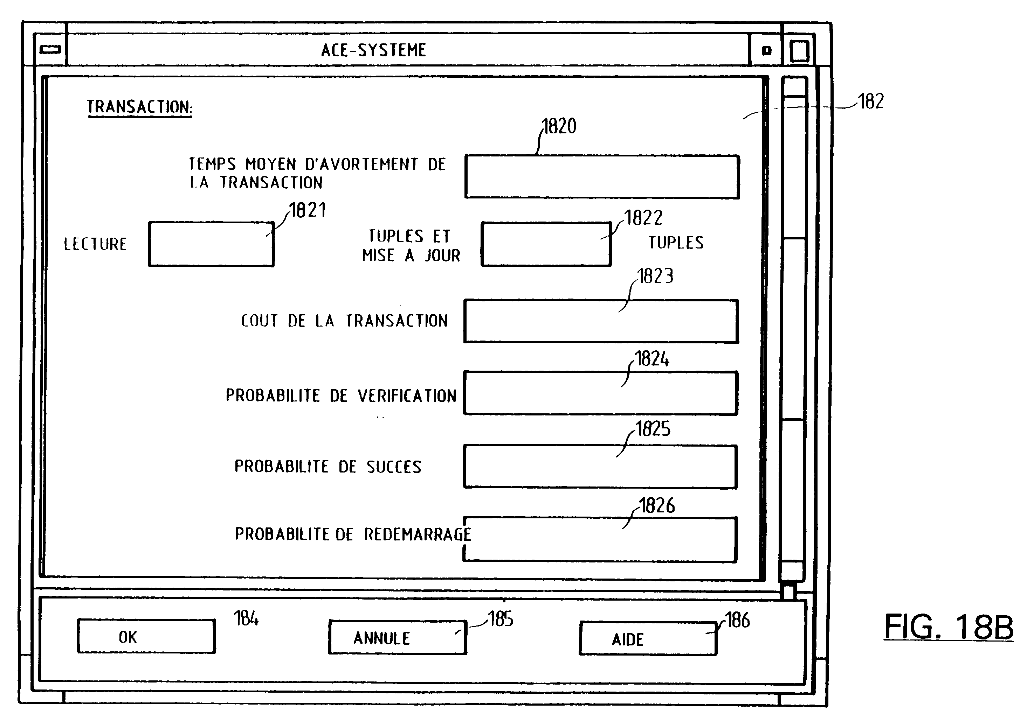

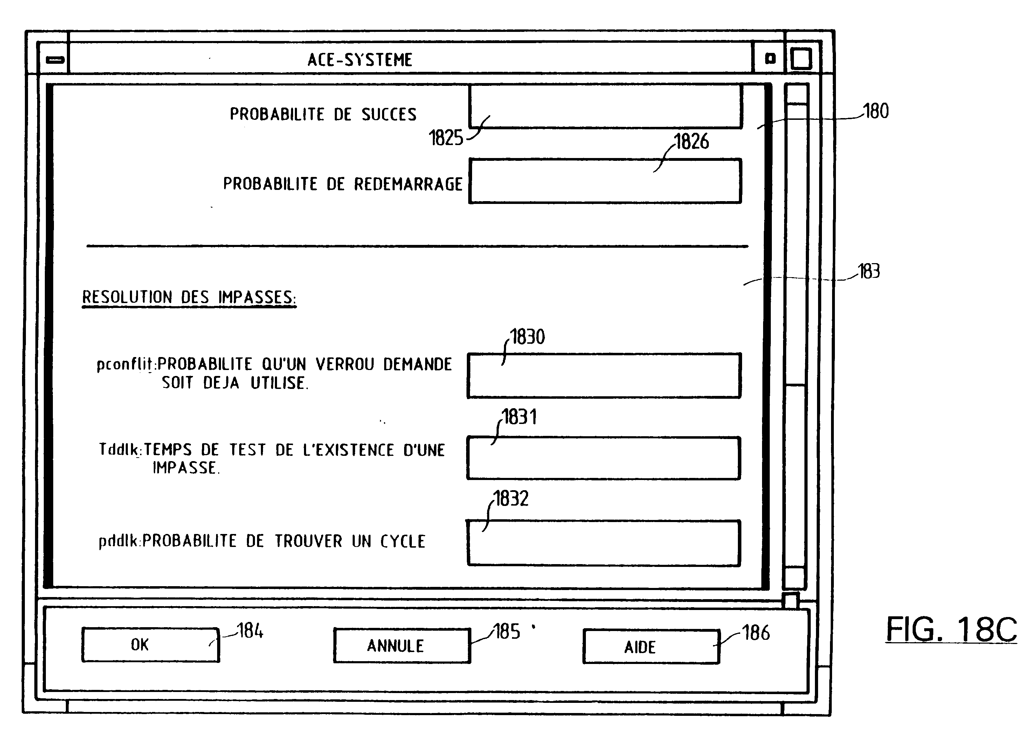

Ce logiciel (9) de présentation comporte un programme permettant d'afficher les différentes fenêtres des figures 12 à 18, ce programme assurant la présentation à la mise en route du système informatique de la fenêtre initiale de la figure 17 sur laquelle est affichée une boite (170) comportant 5 composants, activables chacun par un bouton carré (1701 à 1705). Un premier composant (1701) active la présentation du profil de la base de donnée, un deuxième composant (1702) active la présentation du profil de la bibliothèque de systèmes de gestion de bases de données , un troisième composant (1703) modélisant les systèmes opérationnels et transactionnels "system" permet d'effectuer la présentation Système et correspondant à l'affichage des figures 18, un quatrième composant (1704) "architecture" permet d'effectuer la présentation àe l'architecture correspondant à l'affichage de la figure 12 et un cinquième composant (1705) "Lera-Phy " permet de formuler une requête. Cette fenêtre initiale (170) comporte également une barre de menu qui permet de lancer un menu d'édition (172), un menu d'évaluation (173), un menu de définition des paramètres (174) et un menu fichier (171), ainsi qu'un menu d'aide (175). Lorsque par la souris on sélectionne le pavé carré (1704) "Architecture", le programme ainsi activé permet l'affichage de la présentation correspondant à la figure 12, sur l'écran (11).

La fenêtre "Architecture" affichée comporte un premier pavé de sélection avec défilement vertical (120) permettant d'afficher les configurations de processeurs utilisées dans l'architecture, d'éditer celles-ci par un bouton d'édition (1201) et d'éliminer certaines configurations de processeurs par le bouton élimination (1202). Le pavé avec défilement (120) permet également par une sélection en surbrillance et une validation par le bouton OK (124) de sélectionner le processeur de l'architecture pour laquelle l'évaluation esttà effectuer. Un deuxième pavé à défilement vertical (121) permet également soit la sélection, soit l'édition d'une configuration mémoire à utiliser dans l'architecture pour laquelle l'évaluation est à effectuer. Comme pour le pavé précèdent, ce pavé comporte un bouton d'édition (1211) et un bouton d'enlèvement (1212). Un troisième pavé à défilement vertical (122) permet l'édition ou la sélection d'une configuration de réseau d'interconnexion et par l'utilisation des boutons d'édition (1221) et d'enlèvement (1222), d'éditer ou d'oter une nouvelle configuration. Enfin un quatrième pavé à défilement (123) permet d'éditer ou de sélectionner la configuration. Ce pavé comporte également les boutons d'édition (1231) et d'enlèvement (1232). Un bouton d'annulation (125) et d'aide (126) permet d'annuler les sélections effectuées ou de demander de l'aide. Les boutons (127) de chargement et (128) sauvegarde permettent àe charger des architectures ou de sauvegarder les architectures éditées.

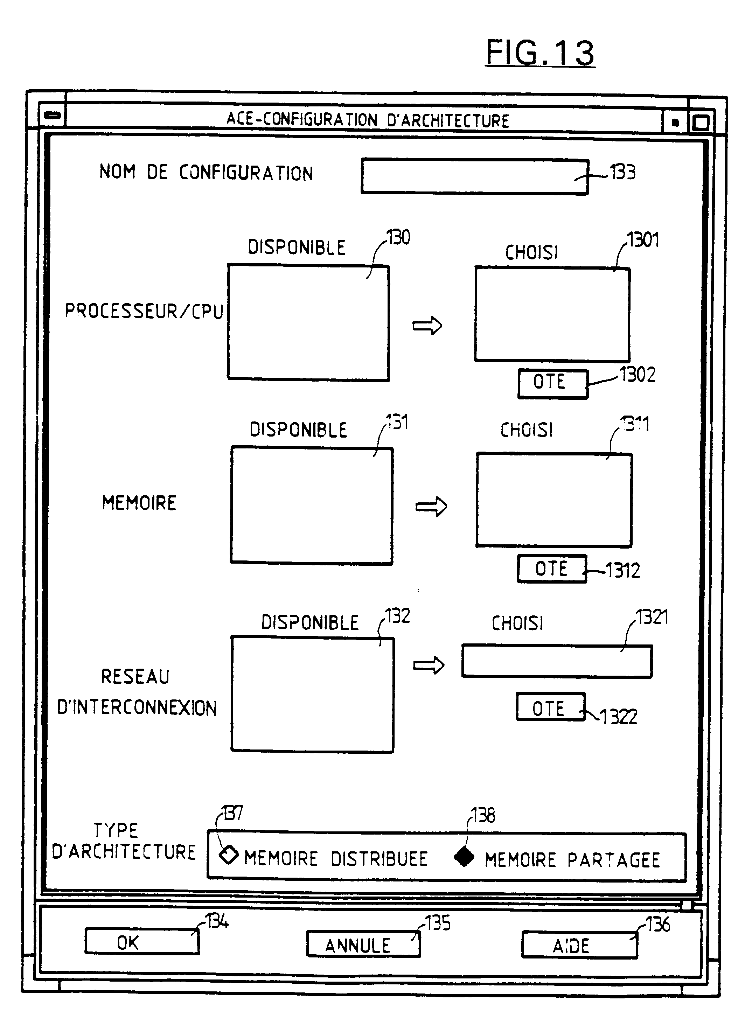

La figure 13 représente la fenêtre (130) de sélection de configuration d'architecture dans laquelle le nom d'une configuration apparait ou est inscrit dans le pavé (133) et les configurations disponibles apparaissent dans le pavé (130) pour le processeur, dans le pavé (131) pour la mémoire, et dans le pavé (132) pour le réseau d'interconnexion. Cette présentation permet de faire apparaître dans un pavé spécifique (1301,1311,1321) la configuration respectivement de processeurs, de mémoires et de réseaux d'interconnexion sélectionné. Des boutons spécifiques (1302,1312,1322) permettent d'oter un des éléments de la configuration. En addition, un classement en architecture de type à mémoire distribuée ou de type à mémoire partagée peut être sélectionné par action sur des boutons respectifs (137,138). Ce classement en architecture à mémoire distribuée ou à mémoire partagée peut être également effectué de façon automatique par la procédure de classement et le dispositif de classement décrit dans la demande de brevet français N° 9115812 déposée le 19.12.91.

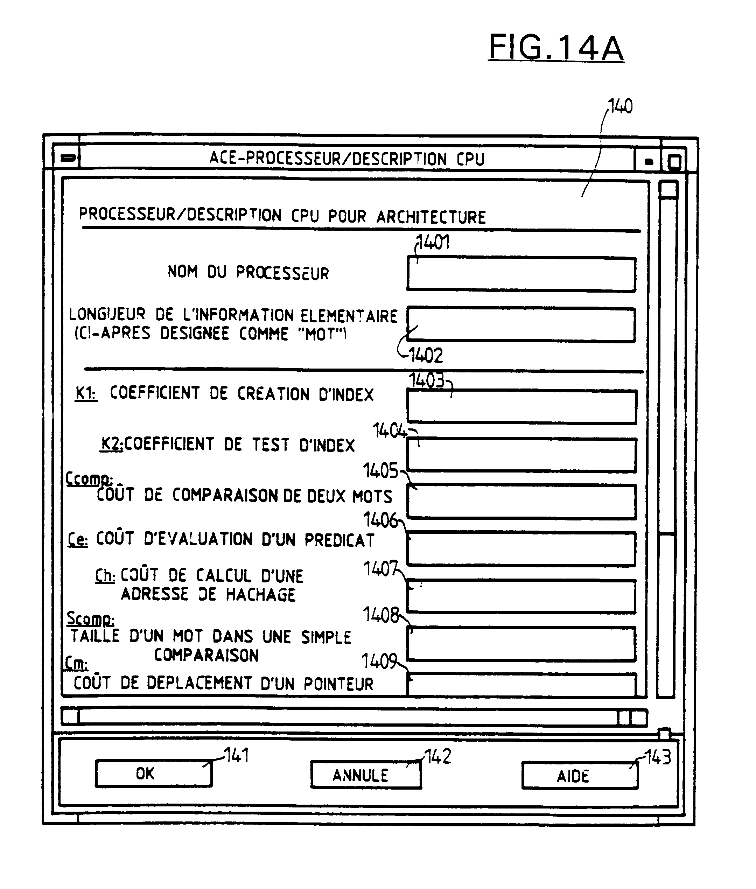

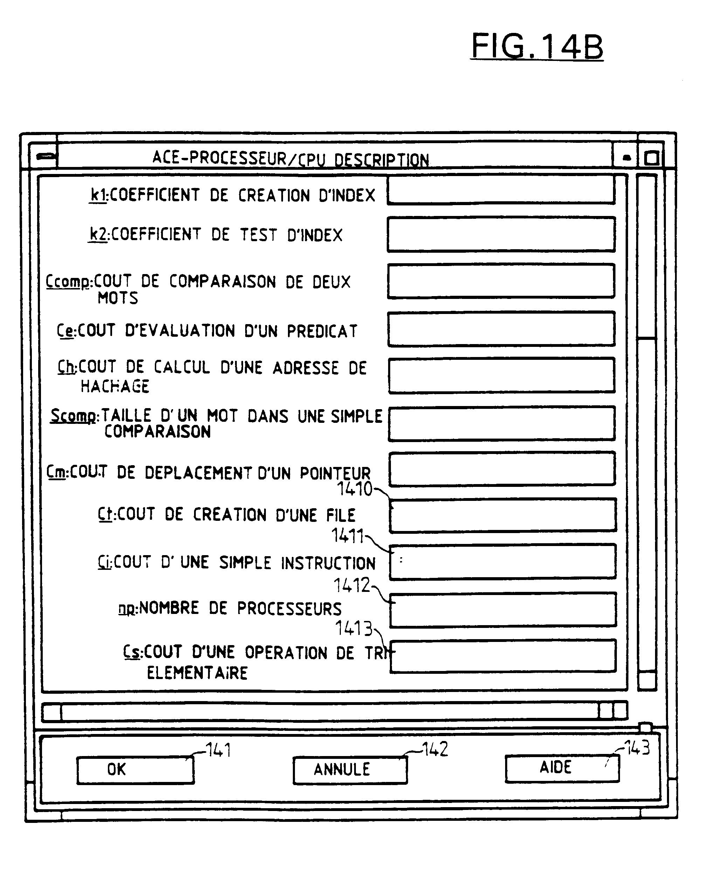

Dans le mode d'édition, lorsqu'une ligne est sélectionnée par exemple dans le pavé à défilement (120 de description des processeurs pour entrer une nouvelle configuration de processeur, le logiciel fait apparaître à l'étape suivante de traitement, une fenêtre (140) de description de processeur dans laquelle un premier pavé (1401) permet de rentrer le nom du processeur, un deuxième pavé (1402) la longueur de l'information élémentaire, un troisième pavé (1403) le coefficient "K1" de création d'index, un quatrième pavé (1404) un coefficient "K2" de test d'index, un cinquième pavé (1405) le coût d'une simple comparaison entre deux informations de base "Ccomp", un sixième pavé (1406) l'attribut "Ce" décrit précédemment, un septième pavé (1407) l'attribut "Ch" représentant le coût de calcul d'une adresse calculée, le huitième pavé (1408) l'attribut "Scomp" décrit précédemment, le neuvième pavé (1409) l'attribut "Cm", le dixième pavé (1410) représenté à la figure 14B, l'attribut "Ct" représente le coût de création d'une file, le onzième pavé (1411) l'attribut "Ci", le douzième pavé (1412) l'attribut "np" représentant le nombre de processeur et le treizième pavé (1413) l'attribut "Cs" décrit précédemment. L'édition se fait en pointant à l'aide de la flèche le pavé et en cliquant puis en rentrant au clavier les informations correspondant à l'attribut du pavé dans lequel on travaille. Après avoir rentré les informations la validation s'effectue par un pointage et validation du bouton de validation (141). L'annulation se fait par le pointage et validation du bouton d'annulation (142). Enfin un bouton d'aide (143) permet l'activation d'un menu d'aide.

Lors de la sélection de la fonction d'édition (1221 fig.12) d'un réseau d'interconnexion, le logiciel fait apparaître la fenêtre de présentation (150) laquelle contient un premier pavé (1501) qui permet de donner un nom au réseau d'interconnexion, un deuxième pavé (1502) permettant de déterminer le paramètre (Pptt) de temps de transfert d'une trame entre deux processeurs, un troisième pavé (1503) permettant de déterminer l'attribut "Tptt" temps de transfert d'une trame entre deux files, un quatrième pavé (1504) permettant de déterminer la taille d'une trame en nombre d'octet "Pac-Se", un cinquième pavé (1505) permettant de déterminer l'attribut "Smt" temps d'envoi d'une trame et un sixième pavé (1506) permettant de déterminer l'attribut "Rmt" temps de réception d'une trame. Cette fenêtre comporte également un bouton de validation (151), un bouton d'annulation (152) et un bouton d'appel d'une procédure d'assistance (153).

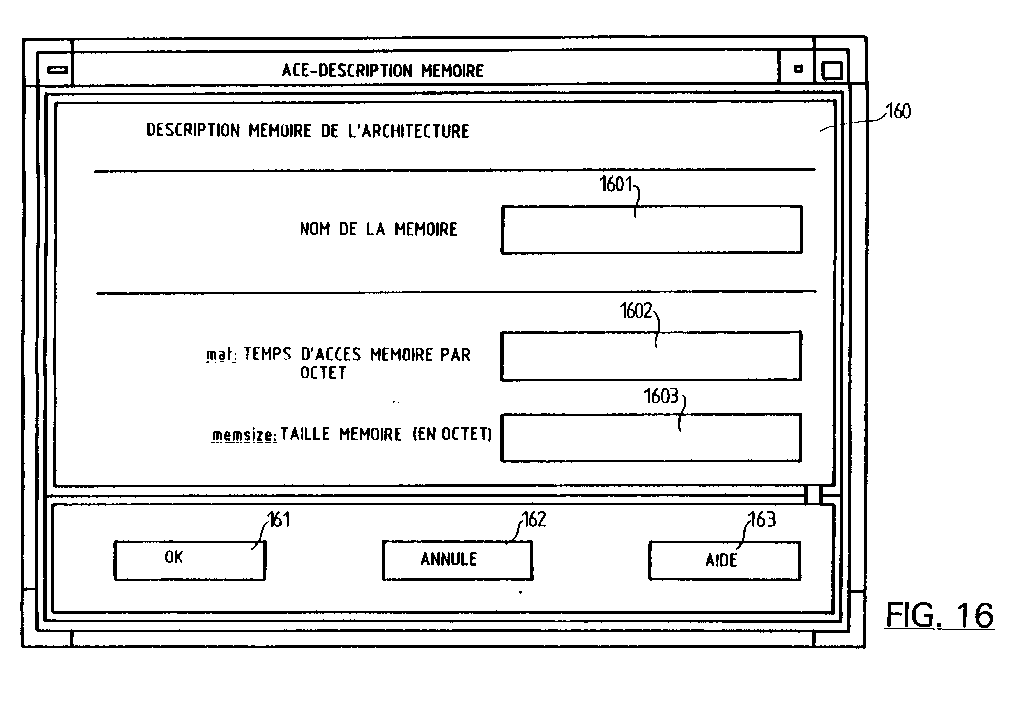

Enfin la sélection de la fonction d'édition (1211) d'une architecture mémoire déclenche, par le logiciel de présentation, l'affichage d'une fenêtre (160 figure 16) permettant dans un premier pavé (1601) d'indiquer le nom de la mémoire, dans un deuxième pavé (1602) le temps d'accès mémoire par octet "mat", et dans un troisième pavé (1603) de déterminer la taille de la mémoire en octet, comme précédemment, cette fenêtre comporte des boutons de validation (161), d'annulation (162) et d'appel d'une procédure d'assistance (163).

L'appel de la bibliothèque système au moyen du bouton (1703) permet l'affichage de fenêtre (180, des figures 18A à 18C) comportant une première zone verrou (181), une deuxième zone de transaction (182) et une troisième zone libération de verrou (183) pour prendre en compte les informations sur le système de commande.

La première zone permet de sélectionner une méthode de verrouillage à 2 phases (2PL)_par un pavé (1810), une deuxième zone constituée par un pavé (1811) permet de sélectionner la granularité, c'est à dire le niveau de verrouillage de l'information (page, tuple, relation) pour permettre l'accès concurrent à cette information, une troisième zone (1812) permet par un pavé, de sélectionner une table de verrous sur les informations. Un pavé (1813) permet d'entrer l'attribut concernant le temps de traitement nécessaire à l'acquisition d'un verrou, un pavé (1814) permet de paramétrer le temps de traitement nécessaire à la libération d'un verrou. Une première zone de la zone de transaction (1820) permet d'afficher le temps moyen d'avortement d'une transaction, une deuxième zone permet d'afficher la probabilité de succès, une deuxième zone de la zone transaction permet d'afficher dans un pavé (1821) les ordres de lectures de tuples et dans un pavé (1822) les ordres de mise à jour de tuples, une troisième zone (1823) permet d'afficher le coût de la transaction, une quatrième (1824) permet d'afficher la probabilité de vérification, une cinquième zone (1825) permet d'afficher une probabilité de succès et enfin une sixième zone (1826) permet d'afficher la probalité de redémarrage. Une première zone (1830) de la zone de résolution des impasses permet d'afficher l'attribut "Pconflit" qui exprime la probabilité qu'un verrou demandé est déjà utilisé, une deuxième zone (1831) permet d'afficher l'attribut "Tddlk" qui exprime le temps pour tester l'existence d'une impasse et une troisième zone (1832) permet d'afficher l'attribut "Pddlk" qui exprime la probabilité de trouver un cycle. Ainsi, grâce aux attributs rentrés soit à l'aide du logiciel de présentation, soit dans le logiciel classique, chacune des bibliothèques est complétée et l'algorithme d'évaluation permet à partir des informations qui lui sont fournies par les bibliothèques sur les configurations sélectionnées ou sur les façons de formuler la requête, d'évaluer le coût d'une requête, dans la configuration donnée choisie et/ou avec la procédure d'exécution de la requète sélectionnée.

Un tel logiciel présente également l'avantage de permettre pour une requête donnée ayant plusieurs schémas ou modes de découpage permettant l'exécution de la requête dans la base de données, de déterminer quel est le coût de chacun de ces modes de découpage et ainsi d'accélérer ou de ralentir l'interrogation. Le mode de découpage va par exemple permettre de déterminer dans la recherche de l'ensemble des voitures rouges si cette recherche doit commencer par les voitures ayant une certaine fiscalité ou par marques de constructeur, ou par numéro d'immatriculation ou par tout autre découpage qui pourrait être utile sur la base de données. Ainsi, par ces différentes bibliothèques, ce dispositif d'évaluation de performance est utilisable quelque soit le type d'architecture ou quelque soit la base de données ou la requête formulée, et par son logiciel de présentation, ce dispositif permet de faciliter à l'utilisateur sa mise en oeuvre.

## Revendications

1. Dispositif adaptable d'évaluation de performance d'une application incluant des requêtes, par résolution analytique de base de données, comprenant un système informatique ayant une architecture donnée, comportant une bibliothèque de connaissance (7) de l'environnement spécifique de la base de données, et un optimiseur paralléliseur (6) qui utilise un évaluateur de performance (8) pour évaluer la requête et sélectionner un plan d'exécution optimale de cette dernière en utilisant l'information de la bibliothèque de connaissance (7), caractérisé en ce que l'optimiseur paralléliseur (6) et l'évaluateur de performance (8) sont indépendants, et en ce que la bibliothèque de connaissance incluant des informations sur l'architecture donnée comporte dans un langage de spécification d'environnement :
une bibliothèque (71) d'architectures modélisant le matériel ;
une bibliothèque (72) de systèmes modélisant le système opérationnel et transactionnel supporté par l'architecture du matériel ;
une bibliothèque (73) de méthodes d'accès et d'opérations modélisant les algorithmes utilisés par le gestionnaire de données, et
une bibliothèque (74) de profils de base de données groupant les connaissances sur le schéma de base de données et des statistiques sur l'application utilisateur, l'évaluateur de performance effectuant une évaluation qui est faite en fonction d'au moins un paramètre sélectionné parmi une pluralité de paramètres définis dans un algorithme de filtres projetés appliqué à ladite bibliothèque de connaissance.

2. Dispositif selon la revendication 1, dans lequel au moins un desdits paramètres est le coût de création d'un process (P_{CREAT}) qui représente le coût (Ci) d'exécution d'une simple instruction sur un système multiplié par le nombre d'instructions nécessaires pour créer le process.

3. Dispositif selon la revendication 1, caractérisé en ce qu'au moins un desdits paramètres représente un coût (C_{INITSCAN}) pour initialiser un balayage et obtenir le premier tuple évalué.

4. Dispositif selon la revendication 1, caractérisé en ce qu'au moins un desdits paramètres est le coût (C_{SCAN}) pour rechercher les tuples suivants et évaluer un prédicat de la requête.

5. Dispositif selon la revendication 1, caractérisé en ce qu'au moins un desdits paramètres (C_{INITSCAN} et C_{SCAN}) est une fonction d'évaluation dépendante de paramètres définis dans l'algorithme de projection de filtre prenant en compte au moins un des paramètres suivants R.card qui est une fonction d'estimation du nombre de prédicats évalués par les tuples balayés, des constantes (C_{NEXT}, C_{INIT}), et du coût (Cₑ) d'évaluation d'un simple prédicat (C_{INIT}) du coût d'initialisation d'un balayage de relation pour obtenir le premier tuple (C_{NEXT}) du coût pour obtenir le tuple suivant.

6. Dispositif selon la revendication 1 caractérisé en ce que la description de l'architecture (71) générale dépend du classement en architecture à mémoire distribuée ou en architecture à mémoire partagée ou en architecture comportant un mélange de deux.

7. Dispositif selon la revendication 1, caractérisé en ce que la bibliothèque de profils de base de données (74) contient les informations de la structure de base de données qui sont orientées vers les relations (relation, attribut, index).

8. Dispositif selon la revendication 1, caractérisé en ce que le moyen d'évaluation (8) est constitué de deux couches, une exécutant les évaluations locales (80), et l'autre les évaluations non locales (81) (Communication et matérialisation).

9. Dispositif selon une des revendications précédentes, caractérisé en ce que l'optimiseur paralléliseur (6) explore seulement les différents algorithmes locaux et se limite à un noeud de calculateur à la fois.

10. Dispositif selon une des revendications précédentes, caractérisé en ce que l'optimiseur paralléliseur (6) prend en compte les communications et la construction du résultat intermédiaire et final.

11. Dispositif selon une des revendications précédentes, caractérisé en ce que l'optimiseur paralléliseur (6) détermine quel algorithme global sera utilisé pour effectuer le parallélisme inter-opération parmi les noeuds du calculateur.

12. Dispositif selon la revendication 11, caractérisé en ce que l'algorithme global précise quels noeuds sont concernés et comment les données intermédiaires sont partagées.

13. Dispositif selon la revendication 1, caractérisé en ce que la bibliothèque (71) de modélisation du matériel comporte une description de l'architecture générale et une description des composants de l'architecture, chaque composant comportant au moins un attribut parmi les suivants :
un attribut définissant la taille mémoire en nombre d'octet (Mem-Si) ;
un attribut définissant le temps d'accès par octet (MAT) ;
un attribut définissant le temps d'exécution par le processeur d'une seule instruction (Cᵢ) ;
un attribut définissant le temps d'exécution par le processeur d'un déplacement d'un pointeur (Cₘ) ;
un attribut définissant la taille maximum d'information dans une comparaison simple (S_{comp}) ;
un attribut définissant le coût d'une simple comparaison entre deux informations de base (C_{comp}) ;
un attribut définissant le coût de calcul d'une adresse calculée par une fonction de hachage (Cₕ) ;
un attribut définissant le coût d'évaluation d'un simple prédicat (Cₑ) ;
un attribut définissant le coût d'une opération de tri élémentaire (Cₛ) ;
un attribut définissant la taille de trame en nombre d'octet (Pac-Si) ;
un attribut définissant le temps pour envoyer une trame (Sₘₜ) ;
un attribut définissant le temps de réception d'une trame (Rₘₜ) ; et enfin
un attribut définissant le temps de transfert d'une trame entre deux processus (Pᵤ) et une description de l'architecture générale constituée à partir des composants.

14. Dispositif selon la revendication 7, caractérisé en ce que la bibliothèque de profil de base de données (74) prend en compte les informations suivantes :
nom de la relation (Rel-Na) ;
cardinalité en nombre de tuples (Rel-Ca) ;
taille des tuples en nombre d'octets (Tup-Si) ;
nombre d'attribut dans un tuple (Att-Nu) ;
degré du parallélisme en nombre de processeurs, fournissant le nombre de processeurs qui manipule en même temps la relation (Deg) ;
nombre d'accès mémoire pour lire les attributs de clé (Rka-Nq) ;
taille en nombre de tuples d'un paquet de données sans sémantique (Ch-Si) ;
taille, en nombre de tuple, d'un paquet de données avec sémantique (Bu-Si); en ce que
pour les attributs, la relation contient :
le nom de l'attribut (Att-Na) ;
le nombre de valeurs distinctes pour cet attribut (Att-Nv) ;
la taille moyenne de l'attribut en nombre d'octets (Att-Si) ;
la valeur maximum de l'attribut (Att-Mav) ;
la valeur minimale de l'attribut (Att-Miv) ;
la distribution des valeurs de l'attribut (Att-Dis); et en ce que dans les cas des index :
la taille d'une page d'arbre B en nombre d'objets (Btp-Si) ;
le nombre de valeurs d'index (In-Nv) ;
la taille de la clé en nombre de bits (In-Si).

15. Dispositif selon la revendication 1, caractérisé en ce que la bibliothèque de système (72) prend en compte les informations sur le système de commande, le système transactionnel, les informations telles que la taille de la ligne de cache en nombre d'octets (Cal-Si) ;
la taille du bus de données entre le processeur et le cache en nombre d'octets (Dab-Si) ;
le nombre de paquets sans sémantique dans la mémoire partagée (Ch-Nu) ;
le nombre de paquets avec sémantique dans la mémoire partagée (BU-Nu) ;
le temps d'accès au cache pour lire ou écrire une formation (Cat) ;
le temps de l'unité centrale pour calculer une comparaison entre deux informations de base (T-Comp) ;
le temps de dépassement associé pour activer chaque opération (Ove-T).

16. Dispositif selon la revendication 1 ou 13, caractérisé en ce que la bibliothèque de connaissance (7) est associée à un logiciel de présentation et de constitution des bibliothèques.

17. Dispositif selon la revendication 16, caractérisé en ce que le logiciel de présentation est associé à un formulaire de sélection d'une architecture qui, sera prise en compte pour le processus d'évaluation, exécuté par l'évaluateur de performance (8).

18. Dispositif selon la revendication 16, caractérisé en ce que le logiciel de présentation et de description permet l'affichage d'au moins une fenêtre spécifique à chaque bibliothèque permettant sa description.

19. Dispositif selon la revendication 1, 13, ou 18, caractérisé en ce que la bibliothèque d'architecture (71) est associée à une fenêtre de configuration d'architecture permettant l'affichage et la sélection de fenêtres de description des composants CPU, mémoire, réseau d'interconnexion constituant l'architecture.

20. Dispositif selon la revendication 19, caractérisé en ce que chaque fenêtre comporte un certain nombre de pavés de remplissage qui entrent sous le contrôle d'un éditeur lorsqu'un pavé est activé par un bouton de la souris pour permettre l'introduction au clavier des attributs de chaque bibliothèque et un pavé permettant d'associer un nom à l'ensemble des attributs d'un composant.

21. Dispositif selon la revendication 17, caractérisé en ce que le formulaire de sélection comporte plusieurs pavés à défilement qui permet par chaque pavé associé (130, 131, 132) à chaque composant (CPU, mémoire, réseau) constituant les architectures de la bibliothèque (71) modélisant le matériel, de sélectionner par le nom associé aux composants, les attributs définissant le composant correspondant à la configuration d'architecture souhaitée en déplaçant la surbrillance et en validant par un bouton de validation (OK).

22. Dispositif selon la revendication 21, caractérisé en ce que le formulaire de sélection d'architecture comporte dans chaque pavé à défilement, un bouton de sélection d'un composant mis en surbrillance.

23. Dispositif selon la revendication 21, caractérisé en ce que le formulaire d'architecture comporte un bouton de chargement et un bouton de sauvegarde.

24. Utilisation du dispositif selon une des revendications précédentes dans un ensemble comprenant un compilateur, comportant un programme (PARSER) (2) d'analyse syntaxique et sémantique des extractions demandées, communiquant d'une part avec un gestionnaire de catalogue (5) et, d'autre part avec un logiciel optimiseur paralléliseur (6) ;
le gestionnaire de catalogue (5) permettant au programme (PARSER) d'analyse syntaxique et sémantique d'effectuer les vérifications sémantiques ;
le programme optimiseur et de parallélisation (6) effectuant :
a) la réécriture des extractions dans une routine d'optimisation logique ;
b) la production d'un plan d'exécution optimal dans une routine d'optimisation physique ;
c) la formulation explicite de la stratégie d'exécution dans une routine de parallélisation fixée par l'optimisation physique.

25. Utilisation du dispositif selon l'une des revendications précédentes, dans un ensemble comprenant un compilateur comportant un programme (PARSER) (2), d'analyse syntaxique et sémantique des extractions demandées, communiquant avec un gestionnaire de catalogue (5), avec un logiciel optimiseur paralléliseur (6), avec un logiciel de présentation et un logiciel d'évaluation de coût caractérisé en ce que le résultat de l'évaluation de coût est présenté dans un formulaire constitué par une fenêtre divisée en trois zones : une zone verrou d'objet, une zone transaction, et une zone de résolution des impasses.

## Patentansprüche

1. Adaptierbare Anordnung zur Bewertung der Leistung einer Anforderungen enthaltenden Anwendung durch analytische Aufgliederung einer Datenbank, wobei die Anordnung ein Datenverarbeitungssystem mit gegebener Architektur umfaßt, das eine Wissensbibliothek (7) der spezifischen Umgebung der Datenbank sowie einen Optimierer/Parallelisierer (6) enthält, der einen Leistungsbewerter (8) verwendet, um die Anforderung zu bewerten und um einen optimalen Ausführungsplan dieser letzteren zu wählen, indem er die Information der Wissensbibliothek (7) verwendet, dadurch gekennzeichnet, daß der Optimierer/Parallelisierer (6) und der Leistungsbewerter (8) voneinander unabhängig sind und daß die Wissensbibliothek, die die Informationen bezüglich der gegebenen Architektur enthält, in einer Umgebungsspezifizierungssprache umfaßt:
eine Bibliothek (71) für Architekturen, die die Hardware modelliert;
eine Bibliothek (72) für Systeme, die das von der Hardware-Architektur unterstützte operations- und transaktionsorientierte System modelliert;
eine Bibliothek (73) für Zugriffs- und Operationsverfahren, die die vom Datenmanager verwendeten Algorithmen modelliert, und
eine Bibliothek (74) für Datenbankprofile, die das Wissen über das Datenbankschema und Statistiken über die Benutzeranwendung zusammenstellt, wobei der Leistungsbewerter eine Bewertung ausführt, die in Abhängigkeit von wenigstens einem Parameter erfolgt, der aus mehreren Parametern gewählt wird, die in einem auf die Wissensbibliothek angewendeten Algorithmus entworfener Filter definiert sind.

2. Anordnung nach Anspruch 1, in der wenigstens einer der Parameter durch die Kosten der Erzeugung eines Prozesses (P_{CREAT}) gegeben ist, die die Kosten (C_{I}) der Ausführung eines einfachen Befehls in einem System, multipliziert mit der Anzahl der für die Erzeugung des Prozesses notwendigen Befehle, repräsentieren.

3. Anordnung nach Anspruch 1, dadurch gekennzeichnet, daß wenigstens einer der Parameter die Kosten (C_{INITSCAN}) zum Initialisieren einer Abtastung und zur Erlangung des ersten bewerteten Tupels repräsentiert.

4. Anordnung nach Anspruch 1, dadurch gekennzeichnet, daß wenigstens einer der Parameter die Kosten (C_{SCAN}) zum Suchen der folgenden Tupel und zum Bewerten eines Prädikats der Anforderung bildet.

5. Anordnung nach Anspruch 1, dadurch gekennzeichnet, daß wenigstens einer der Parameter (C_{INITSCAN} und C_{SCAN}) eine Bewertungsfunktion ist, die von den in dem Filterentwurfsalgorithmus definierten Parametern abhängt, der wenigstens einen der folgenden Parameter einbezieht: R.card, der eine Funktion zum Schätzen der Anzahl von bewerteten Prädikaten pro abgetastetem Tupel ist, Konstanten (C_{NEXT}, C_{INIT}) und Kosten (Cₑ) der Bewertung eines einfachen Prädikats, wobei (C_{INIT}) die Kosten der Initialisierung einer Relationsabtastung und zur Erlangung des erste Tupels sind und (C_{NEXT}) die Kosten zur Erlangung des folgenden Tupels sind.

6. Anordnung nach Anspruch 1, dadurch gekennzeichnet, daß die allgemeine Beschreibung der Architektur (71) von der Klassifizierung in eine Architektur mit verteiltem Speicher oder in eine Architektur mit gemeinsam genutztem Speicher oder in eine ein Gemisch von beiden enthaltende Architektur abhängt.

7. Anordnung nach Anspruch 1, dadurch gekennzeichnet, daß die Datenbankprofil-Bibliothek (74) die Informationen bezüglich der Struktur der Datenbank enthält, die auf die Relationen (Relation, Attribut, Index) gerichtet sind.

8. Anordnung nach Anspruch 1, dadurch gekennzeichnet, daß das Bewertungsmittel (8) aus zwei Schichten gebildet ist, wovon eine die lokalen Bewertungen (80) und die andere die nichtlokalen Bewertungen (81) (Kommunikation und Ausführung) ausführt.

9. Anordnung nach einem der vorangehenden Ansprüche, dadurch gekennzeichnet, daß der Optimierer/Parallelisierer (6) nur die verschiedenen lokalen Algorithmen untersucht und zu einem Zeitpunkt auf einen Knoten des Rechners eingeschränkt ist.

10. Anordnung nach einem der vorangehenden Ansprüche, dadurch gekennzeichnet, daß der Optimierer/Parallelisierer (6) die Kommunikationen und die Konstruktion des Zwischen- und des Endergebnisses einbezieht.

11. Anordnung nach einem der vorangehenden Ansprüche, dadurch gekennzeichnet, daß der Optimierer/Parallelisierer (6) bestimmt, welcher globale Algorithmus verwendet wird, um Operationen zwischen den Knoten des Rechners parallel auszuführen.

12. Anordnung nach Anspruch 11, dadurch gekennzeichnet, daß der globale Algorithmus präzisiert, welche Knoten betroffen sind und wie die Zwischendaten gemeinsam genutzt werden.

13. Anordnung nach Anspruch 1, dadurch gekennzeichnet, daß die Bibliothek (71) zur Hardware-Modellierung eine Beschreibung der allgemeinen Architektur und eine Beschreibung der Komponenten der Architektur enthält, wobei jede Komponente wenigstens eines der folgenden Attribute enthält:
ein Attribut, das die Speichergröße anhand der Anzahl der Bytes definiert (Mem-Si);
ein Attribut, das die Zugriffszeit pro Byte (MAT) definiert;
ein Attribut, das die Ausführungszeit eines einzigen Befehls durch den Prozessor (Cᵢ) definiert;
ein Attribut, das die Ausführungszeit einer Verschiebung eines Zeigers durch den Prozessor (Cₘ) definiert;
ein Attribut, das die maximale Informationsgröße in einem einfachen Vergleich (S_{comp}) definiert;
ein Attribut, das die Kosten eines einfachen Vergleichs zwischen zwei Basisinformationen (C_{comp}) definiert;
ein Attribut, das die Kosten der Berechnung einer Adresse (Cₕ), die durch eine Schneidefunktion berechnet wird, definiert;
ein Attribut, das die Bewertungskosten eines einfachen Prädikats (Cₑ) definiert;
ein Attribut, das die Kosten einer elementaren Klassierungsoperation (Cₛ) definiert;
ein Attribut, das die Rahmengröße anhand der Anzahl der Bytes (Pac-Si) definiert;
ein Attribut, das die Zeit zum Schicken eines Rahmens (Sₘₜ) definiert;
ein Attribut, das die Empfangszeit eines Rahmens (Rₘₜ) definiert; und schließlich
ein Attribut, das die Übertragungszeit eines Rahmens zwischen zwei Prozessen (Pᵤ) und eine Beschreibung der aus den Komponenten gebildeten allgemeinen Architektur definiert.

14. Anordnung nach Anspruch 7, dadurch gekennzeichnet, daß die Datenbankprofil-Bibliothek (74) die folgenden Informationen einbezieht:
Name der Relation (Rel-Na);
Kardinalität anhand der Anzahl der Tupel (Rel-Ca);
Größe der Tupel anhand der Anzahl der Bytes (Tup-Si);
Attributanzahl in einem Tupel (Att-Nu);
Parallelitätsgrad anhand der Anzahl von Prozessoren, der die Anzahl der Prozessoren liefert, die gleichzeitig die Relation (Deg) bearbeiten;
Anzahl der Speicherzugriffe zum Lesen der Attribute des Schlüssels (Rka-Nq);
Größe eines Datenpakets ohne Semantik anhand der Anzahl der Tupel (Ch-Si);
Größe eines Datenpakets mit Semantik anhand der Anzahl der Tupel (Bu-Si),und
daß für die Attribute die Relation enthält:
den Namen des Attributs (Att-Na);
die Anzahl der verschiedenen Werte für dieses Attribut (Att-Nv);
die mittlere Größe des Attributs anhand der Anzahl von Bytes (Att-Si);
den Maximalwert des Attributs (Att-Mav);
den Minimalwert des Attributs (Att-Miv);
die Verteilung der Werte des Attributs (Att-Dis);
in den Fällen von Indexen:
die Größe einer Seite des Baums B anhand der Anzahl von Objekten (Btp-Si);
die Anzahl der Indexwerte (In-Nv);
die Größe des Schlüssels anhand der Anzahl von Bits (In-Si).

15. Anordnung nach Anspruch 1, dadurch gekennzeichnet, daß die Systembibliothek (72) die Informationen über das Befehlssystem und das transaktionsorientierte System sowie die Informationen wie etwa die Größe der Cache-Leitung anhand der Anzahl von Bytes (Cal-Si) einbezieht; ferner
die Größe des Datenbusses zwischen dem Prozessor und dem Cache anhand der Anzahl von Bytes (Dab-Si);
die Anzahl von Paketen ohne Semantik in dem gemeinsam genutzten Speicher Ch-Nu)
die Anzahl von Paketen (BU-Nu) mit Semantik in dem gemeinsam genutzten Speicher;
die Zugriffszeit auf den Cachespeicher zum Lesen oder Schreiben einer Formation (Cat);
die Zeit der Zentraleinheit zum Berechnen eines Vergleichs zwischen zwei Basisinformationen (D-Comp); und
die Überschreitungsdauer (Ove-T), die der Aktivierung jeder Operation zugeordnet ist.

16. Vorrichtung nach Anspruch 1 oder 13, dadurch gekennzeichnet, daß der Wissensbibliothek (7) eine Software zur Präsentation und zur Bildung von Bibliotheken zugeordnet ist.

17. Vorrichtung nach Anspruch 16, dadurch gekennzeichnet, daß der Präsentationssoftware ein Formular zum Wählen einer Architektur zugeordnet ist, welche für den Bewertungsprozeß einbezogen wird, der vom Leistungsbewerter (8) ausgeführt wird.

18. Vorrichtung nach Anspruch 16, dadurch gekennzeichnet, daß die Präsentations- und Beschreibungssoftware die Anzeige wenigstens eines für jede Bibliothek spezifischen Fensters ermöglicht, das deren Beschreibung ermöglicht.

19. Vorrichtung nach Anspruch 1, 13 oder 18, dadurch gekennzeichnet, daß der Architekturbibliothek (71) ein Architekturkonfigurationsfenster zugeordnet ist, das die Anzeige und die Wahl von Fenstern zur Beschreibung der Komponenten CPU, Speicher und Verbindungsnetz, die die Architektur bilden, ermöglicht.

20. Vorrichtung nach Anspruch 19, dadurch gekennzeichnet, daß jedes Fenster eine bestimmte Anzahl von Ausfüllkästchen, die unter der Steuerung eines Editors eingegeben werden, wenn ein Kästchen durch eine Maustaste aktiviert wird, um die Eingabe der Attribute jeder Bibliothek in die Tastatur zu ermöglichen, sowie ein Kästchen enthält, das die Zuordnung eines Namens an die Gesamtheit der Attribute einer Komponente ermöglicht.

21. Anordnung nach Anspruch 17, dadurch gekennzeichnet, daß das Wählformular mehrere Laufkästchen enthält und für jedes Kästchen (130, 131, 132), das einer die Architekturen der Hardwaremodellierungsbibliothek (71) bildenden Komponente (CPU, Speicher, Netz) zugeordnet ist, ermöglicht, durch den den Komponenten zugeordneten Namen die Attribute zu wählen, die die der gewünschten Architekturkonfiguration entsprechende Komponente definieren, indem die Helligkeitshervorhebung verschoben wird und durch eine Validierungstaste (OK) validiert wird.

22. Anordnung nach Anspruch 21, dadurch gekennzeichnet, daß das Architekturwählformular in jedem Laufkästchen eine Taste zum Auswählen einer mit erhöhter Helligkeit dargestellten Komponente enthält.

23. Anordnung nach Anspruch 21, dadurch gekennzeichnet, daß das Architekturformular eine Ladetaste und eine Sicherungstaste enthält.

24. Verwendung der Anordnung nach einem der vorangehenden Ansprüche in einer Gesamtheit, die einen Kompilierer enthält, der ein Programm (PARSER) (2) zur syntaktischen und semantischen Analyse der angeforderten Speicherentnahmen enthält, das einerseits mit einem Katalogmanager (5) und andererseits mit einer Optimierer/Parallelisierer-Software (6) Nachrichten austauscht;
wobei der Katalogmanager (5) dem Programm (PARSER) zur syntaktischen und semantischen Analyse ermöglicht, die semantischen Verifikationen auszuführen;
wobei das Optimierer- und Parallelisierungsprogramm (6):
a) das Neuschreiben der Entnahmen in einer logischen Optimierungsroutine;
b) die Erzeugung eines optimalen Ausführungsplans in einer physischen Optimierungsroutine; und
c) die explizite Formulierung der Ausführungsstrategie in einer durch die physische Optimierung festgelegten Parallelisierungsroutine
ausführt.

25. Verwendung der Anordnung nach einem der vorangehenden Ansprüche in einer Gesamtheit, die einen Kompilierer enthält, der ein Programm (PARSER) (2) zur syntaktischen und semantischen Analyse von angeforderten Entnahmen enthält, das mit einem Katalogmanager (5), mit einer Optimierer/Parallelisierer-Software (6), mit einer Präsentationssoftware und mit einer Kostenbewertungssoftware Nachrichten austauscht, dadurch gekennzeichnet, daß das Ergebnis der Kostenbewertung in einem Formular dargestellt wird, das durch ein Fenster gebildet ist, das in drei Zonen unterteilt ist: in eine gesperrte Objektzone, in eine Transaktionszone und in eine Zone zur Auflösung von Sackgassen.

## Claims

1. Adaptable device for evaluating the performance of an application including requests, by analytical database resolution, comprising a computer system having a given architecture, containing a library of knowledge (7) of the specific environment of the database, and an optimiser paralleliser (6) that uses a performance evaluator (8) for evaluating the request and selecting an optimal plan for executing the latter, using the information from the knowledge library (7), characterised in that the optimiser paralleliser (6) and the performance evaluator (8) are independent, and in that the knowledge library including information on the given architecture includes, in an environment specification language:
an architecture library (71) modelling the hardware;
a system library (72) modelling the operational and transactional system supported by the architecture of the hardware;
an access method and operation library (73) modelling the algorithms used by the data manager, and
a database profile library (74) grouping knowledge on the database diagram and statistics on the user application, the performance evaluator effecting an evaluation that is made as a function of at least one parameter selected from among a plurality of parameters defined in an algorithm of projected filters applied to said knowledge library.

2. Device according to Claim 1, in which at least one of said parameters is the process creation cost (P_{CREAT}), which represents the cost (Cᵢ) of executing a single instruction on a system multiplied by the number of instructions necessary in order to create the process.

3. Device according to Claim 1, characterised in that at least one of said parameters represents a cost (C_{INITSCAN}) for initialising a scan and getting the first evaluated tuple.

4. Device according to Claim 1, characterised in that at least one of said parameters is the cost (C_{SCAN}) of searching for the subsequent tuples and evaluating a predicate of the request.

5. Device according to Claim 1, characterised in that at least one of said parameters (C_{INITSCAN}) and C_{SCAN}) is an evaluation function dependent on parameters defined in the filter projection algorithm taking into account at least one of the following R.card parameters, which is a function for estimating the number of predicates evaluated by the tuples scanned, the constants (C_{NEXT}, C_{INIT}), and the cost (Cₑ) of evaluating a simple predicate (C_{INIT}) of the cost of initialising a relation scan in order to get the first tuple (C_{NEXT}) of the cost in order to get the next tuple.

6. Device according to Claim 1 characterised in that the description of the general architecture (71) depends on the classification into distributed-memory architecture or shared-memory architecture or architecture comprising a mixture of two.

7. Device according to Claim 1, characterised in that the database profile library (74) contains the information on the database structure that is oriented towards the relations (relation, attribute, index).

8. Device according to Claim 1, characterised in that the evaluation means (8) is constituted by two layers, one executing the local evaluations (80), and the other the non-local evaluations (81) (Communication and materialisation).

9. Device according to one of the preceding Claims, characterised in that the optimiser paralleliser (6) explores only the different local algorithms and is limited to one computer node at a time.

10. Device according to one of the preceding claims, characterised in that the optimiser paralleliser (6) takes into account the communications and the construction of the intermediate and final result.

11. Device according to one of the preceding claims, characterised in that the optimiser paralleliser (6) determines which global algorithm will be used in order to effect the inter-operation parallelism among the computer nodes.

12. Device according to Claim 11, characterised in that the global algorithm specifies which nodes are concerned and how the intermediate data are shared.

13. Device according to Claim 1, characterised in that the library (71) for modelling the hardware contains a description of the general architecture and a description of the components of the architecture, each component having at least one attribute from among the following:
an attribute defining the memory size in number of bytes (Mem-Si),
an attribute defining the access time by byte (MAT);
an attribute defining the execution time by the processor of a single instruction (Cᵢ);
an attribute defining the execution time by the processor of a displacement of a pointer (Cₘ);
an attribute defining the maximum size of information in a simple comparison (S_{comp});
an attribute defining the cost of a simple comparison between two items of basic information (C_{comp});
an attribute defining the cost of calculating an address calculated by a hashing function (Cₕ);
an attribute defining the cost of evaluating a simple predicate (Cₑ);
an attribute defining the cost of an elementary sorting operation (Cₛ);
an attribute defining the frame size in number of bytes (Pac-Si);
an attribute defining the time for sending a frame (Sₘₜ);
an attribute defining the time for receiving a frame (Rₘₜ); and finally
an attribute defining the transfer time of a frame between two processes (Pᵤ) and a description of the general architecture constituted on the basis of the components.

14. Device according to Claim 7, characterised in that the database profile library (74) takes into account the following information:
name of the relation (Rel-Na);
cardinality in number of tuples (Rei-Ca);
size of the tuples in number of bytes (Tup-Si);
number of attribute in a tuple (Att-Nu);
degree of parallelism in number of processors, supplying the number of processors that manipulate the relation at the same time (Deg);
number of memory accesses in order to read the key attributes (Rka-Nq);
size in number of tuples of a data packet without semantics (Ch-Si);
size, in number of tuples, of a data packet with semantics (Bu-Si);
in that, for the attributes, the relation contains:
the name of the attribute (Att-Na);
the number of distinct values for that attribute (Att-Nv);
the average size of the attribute in number of bytes (Att-Si);
the maximum value of the attribute (Att-Mav);
the minimum value of the attribute (Att-Miv);
the distribution of the values of the attribute (Att-Dis);
and in that, in the case of indices:
the size of a page of tree B in number of objects (Btp-Si);
the number of index values (in-Nv);
the size of the key in number of bits (in-Si).

15. Device according to Claim 1, characterised in that the system library (72) takes into account the information on the command system, the transactional system, the information such as the size of the cache line in number of bytes (Cal-Si);
the size of the data bus between the processor and the cache in number of bytes (Dab-Si);
the number of packets without semantics in the shared memory (Ch-Nu);
the number of packets with semantics in the shared memory (BU-Nu);
the time to access the cache in order to read or write a formation (Cat);
the time for the central unit to calculate a comparison between two items of basic information (T-Comp);
the associated overrun time for activating each operation (Ove-T).

16. Device according to Claim 1 or 13, characterised in that the knowledge library (7) is associated with software for presenting and constituting libraries.

17. Device according to Claim 16, characterised in that the presentation software is associated with an architecture selection form that will be taken into account for the evaluation process, executed by the performance evaluator (8).

18. Device according to Claim 16, characterised in that the presentation and description software makes it possible to display at least one window specific to each library allowing its description.

19. Device according to Claim 1, 13 or 18, characterised in that the architecture library (71) is associated with an architecture configuration window permitting the display and selection of windows describing CPU components, memory, interconnection network constituting the architecture.

20. Device according to Claim 19, characterised in that each window contains a number of filling-in blocks that come under the control of an editor when a block is activated by a mouse button to allow the keyboarding of the attributes of each library and a block making it possible to associate a name with all the attributes of a component.

21. Device according to Claim 17, characterised in that the selection form contains several scrolling blocks, which makes it possible, for each block (130, 131, 132) associated with each component (CPU, memory, network) constituting the architectures of the library (71) modelling the hardware, to select, by the name associated with the components, the attributes defining the component corresponding to the desired architecture configuration by displacing the highlighting and by validating with a validation button (OK).

22. Device according to Claim 21, characterised in that the architecture selection form contains, in each scrolling block, a button for selecting a highlighted component.

23. Device according to Claim 21, characterised in that the architecture form contains a loading button and a saving button.

24. Use of the device according to one of the preceding claims in an assembly comprising a compiler, containing a program (PARSER) (2) for syntactical and semantic analysis of the requested extractions, communicating on the one hand with a catalogue manager (5) and, on the other hand, with optimiser paralleliser software (6);
the catalogue manager (5) allowing the syntactical and semantic analysis program (PARSER) to effect semantic checks;
the optimising and parallelisation program (6) effecting:
a) the rewriting of extractions in a logical optimisation routine;
b) the production of an optimal execution plan in a physical optimisation routine;
c) the explicit formulation of the execution strategy in a parallelisation routine fixed by the physical optimisation.

25. Use of the device according to one of the preceding claims, in an assembly comprising a compiler containing a program (PARSER) (2), for syntactical and semantic analysis of the requested extractions, communicating with a catalogue manager (5), with optimiser paralleliser software (6), with presentation software and cost-evaluation software characterised in that the result of the cost evaluation is presented in a form constituted by a window divided into three zones: an object-lock zone, a transaction zone, and a dead-end resolution zone.
